# EUROPEAN PATENT APPLICATION

(11) **EP 4 696 983 A1**
(43) Date of publication of application: **18.02.2026**
(21) Application number: 24194671.4
(22) Date of filing: 14.08.2024
(51) Int. Cl.: G01C 21/00, G06F 16/29

(54) **METHOD OF PERFORMING A MAP DATA-RELATED FUNCTION, ELECTRONIC MAP, AND MACHINE-READABLE INSTRUCTION CODE**

(71) Applicant: TomTom Global Content B.V., 1011 AC Amsterdam (NL)
(72) Inventor: Plichta, Dominik Michal, 1011 AC Amsterdam (NL); Kozielewski, Antoni Jakub, 1011AC Amsterdam (NL); Uribarri Rodriguez, Unai, 1011AC Amsterdam (NL)
(74) Representative: Meier, Florian

(57) **Abstract**

For performance of a map data-related function, a processing system (20) is operative to access electronic map data stored in a plurality of files (24). Each of the plurality of files (24) is associated with a tile of a tiling. Different tiles relate to different geographic regions. At least some of the files may include references, which are used to obtain object data for at least one map object. A tile directory (26) may provide version information useful for retrieval of the object data.

## Description

### TECHNICAL FIELD

Embodiments of the invention relate to techniques associated with electronic map data, such as electronic map data for use in navigation, driver assistance, advanced driver assistance, and/or automated driving. Embodiments of the invention relate in particular to techniques useful in storing of and/or providing access to electronic map data.

### BACKGROUND

Electronic map data is a valuable resource for enhancing vehicle navigation functions, driver assistance systems, and enabling autonomous driving. It provides information about the roads, routes, and surroundings that empower these and other technologies to operate efficiently and safely. One of the advantages of electronic map data is that it can be updated in an ongoing basis (i.e., continually), to reflect changes such as road changes, construction sites, and/or traffic patterns. This ensures that navigation systems can provide drivers with the relevant guidance, reducing the likelihood of getting lost or encountering unexpected obstacles. Vehicle navigation functions, driver assistance systems, and autonomous driving systems also use electronic map data to enhance safety and improve driving comfort. Features like lane departure warnings, blind-spot detection, and adaptive cruise control can utilize the information provided by electronic maps to make informed decisions and provide timely alerts or interventions. For example, if the electronic map data indicates a sharp curve ahead, the system can adjust the vehicle's speed or warn the driver to ensure safe maneuvering. Additionally, electronic map data can assist in identifying speed limits, traffic signs, and other road conditions, allowing driver assistance systems to act accordingly. Thus, electronic map data helps vehicles to execute appropriate actions, enhancing safety and overall efficiency.

WO 2023/154199 A1 and EP 3 832 422 A1 disclose techniques related to electronic map data.

There continues to be a need in the art for techniques that provide enhanced flexibility in techniques of storing of and/or providing access to electronic map data. For illustration, it is often challenging and/or time-consuming for a processing system to provide access to electronic map data in a manner that facilitates retrieval of all objects in a certain region with a short access time, to enable map data to be updated based at least on data received from various map data sources, or to perform other actions that can interface systems handling map layers with map consumers.

### SUMMARY

It is an object of embodiments of the invention to provide methods, systems, and/or machine-readable instruction code that provide enhanced flexibility in storing and/or accessing map data. It is in particular an object of embodiments to provide techniques of storing and/or accessing map data in which object data defining map objects can be stored and retrieved efficiently, and in which changes in map geometry (such as shifts in object coordinates) can be implemented in an efficient and reliable manner.

According to embodiments of the invention, a method, an electronic map, and machine-readable instruction code as recited in the independent claims are provided. The dependent claims define preferred and advantageous embodiments.

According to an aspect of the invention, a method of performing a map data-related function is provided. The method comprises receiving, by a processing system, a request. The method further comprises accessing, by the processing system, electronic map data, wherein the electronic map data comprises a plurality of files storing object data of map objects located in a plurality of tiles, wherein different ones of the plurality of tiles are associated with different geographic regions of an area covered by the electronic map data. Accessing the electronic map data comprises: accessing, based at least on the request, a tile directory; identifying, based at least on the request and the tile directory, a first file of the plurality of files; and accessing, based at least on the request, object data for an object in: the first file responsive to determining, by the processing system, that the object data is included in the first file; in a second file of the plurality of files responsive to determining, by the processing system, that the first file includes a reference to the second file for accessing the object data, the second file being different from the first file. The method further comprises performing, by the processing system, an operation based at least one the object data.

Various effects and advantages are associated with the method. The electronic map data are stored in a plurality of files, each of which is associated with a tile. Thus, the files are related to the different geographic regions. The method accommodates scenarios in which the object data is stored in a file (the second file) different from the first file to which the tile directory directs the access, with the first file including a reference to the second file and allowing the object data to be retrieved from the second file. This provides versatility in accommodating shifting geometries (which may be caused by, e.g., changes in node coordinates across tile boundaries) while allowing objects to be identified in a manner that directs the request to the first file, thereby obviating the need for deleting and re-creating an object if it is shifted across tile boundaries. Furthermore, for objects which extend over more than one tile, this may reduce storage space requirements because the full information does not need to be stored in each of the files corresponding to the various tiles over which the object extends. The tile directory in association with the plurality of files, each of which related to a geographic region, also provides advantages with respect to access times. Thus, the method provides a technique in which the object data can be modified (e.g., by means of a change, deletion, or addition of object data) and/or read in an efficient manner. In particular, the method provides benefits with regard to access times while at the same time providing enhanced versatility for modifying the electronic map data during operation of the processing system.

The electronic map data may be or may comprise versioned electronic map data. The tile directory may comprise version information for each of the plurality of files and/or each of the plurality of tiles. Accessing the object data may comprise retrieving, based at least on the request, first file version information for the first file from the tile directory. Accessing the object data may comprise accessing the first file based at least on the first file version information.

Thereby, an efficient access mechanism is provided even when versioned electronic map data are used. The versioned electronic map data provide the effect that historical versions of the electronic map data remain available. This may be useful for functions such as considering previous road network layouts, considering points of interest as located at a time in the past, or other functions that require knowledge of electronic map data as applicable at a time in the past. Moreover, the use of the versioned electronic map data provides robustness in the sense that it is possible to revert to a previous version that pre-dates a most recent version. This allows the processing system to undo some of the modifications of electronic map data that were implemented in the meantime. This may be done responsive to detecting, by the processing system, that there is a consistency issue or other issue (such as data integrity) with the most recent version of the electronic map data. Being able to access previous versions also assists to ensure conformity with requirements that may need to be respected in the context of compliance. Moreover, versioning provides the effect of allowing source of errors to be identified. Versioning on a tile level may also provide storage advantages, as some areas may be changed/updated much more often than other areas.

Accessing the object data may further comprise retrieving, based at least on the reference to the second file included in the first file, second file version information for the second file from the tile directory, and accessing the second file based at least on the second file version information. Accessing the object data may comprise accessing the second file based at least on the second file version information.

Thereby, an efficient access mechanism is provided even when versioned electronic map data are used. The access technique allows the object data to be retrieved by accessing the first file, based at least on the request, with the first file including the reference to the second file in which the object data are stored. In either case, the tile directory includes the version information that allows the processing system to determine which file and file version(s) is/are to be accessed.

Accessing the object data may comprise determining, based at least on the tile directory and the request, which ones of several file versions of the first and/or second files are to be accessed, with the different file versions corresponding to different points in time.

Thereby, an efficient access mechanism is provided even when versioned electronic map data are used, providing the combined effect of efficient access while supporting versioned electronic map data that allows electronic map versions other than a most recent map version to be accessed and/or to revert to an electronic map version other than a most recent map version.

Accessing the object data may comprise an identification of time or version data in the request, and determining, based at least on the tile directory and the time or version data in the request, which ones of several file versions of the first and/or second files are to be accessed.

Thereby, an efficient access mechanism is provided even when versioned electronic map data are used, providing the combined effect of efficient access while supporting versioned electronic map data.

The identification of time or version data in the request may comprise determining, based at least on the tile directory and responsive to detecting that no time or version data is included in the request, most recent file versions of the first and/or second files are to be accessed.

Thereby, an efficient access mechanism is provided even when versioned electronic map data are used, providing the combined effect of efficient access while supporting versioned electronic map data.

Accessing the tile directory may comprise accessing the tile directory in a memory, such as a random access memory (RAM).

Thereby, an efficient access mechanism is provided while affording enhanced versatility in maintaining and providing electronic map data.

The tile directory may comprise a hash table and/or hash values, and accessing the tile directory may comprise accessing the table and/or hash values in the memory, e.g., the RAM.

Thereby, an efficient access mechanism is provided while affording enhanced versatility in maintaining and providing electronic map data.

The first file may be associated with a first tile of the plurality of tiles. The second file may be associated with a second tile of the plurality of the tiles, the second tile being different from the first tile.

Thereby, while the plurality of files may be related to different geographic regions covered by different tiles of a tiling, it is not required that object data for a map object to be stored exclusively in the file which is associated with a tile in which coordinates of the respective map object are located. This greatly enhances the versatility. For illustration, it is more readily possible for the processing system to accommodate changes in coordinates of a map object that cause the respective map object to be shifted from a geolocation within one of the tiles of the tiling to a geolocation within another one of the tiles of the tiling. Furthermore, for objects which extend over more than one tile, object information may need to be stored only in a file corresponding to one tile.

The electronic map data may store an entire geometry of a map object that extends across several tiles in a file corresponding to one of the several tiles. This file may thereby serve as an anchor. Other files associated with other ones of the several tile (i.e., with those tiles other than the tile to which the file relates in which the entire object geometry is stored) may respectively store therein references to the file and/or tile that serves as anchor.

Thereby, ease of handling and access is provided for such objects. The references facilitate effective access operations for various queries, such as queries for objects that overlap with an area.

The first tile may abut on the second tile at a corner point of the first tile or along an edge of the first tile.

Thereby, use cases of particular practical importance are taken into consideration, in which coordinates of a map object located in proximity to an edge or corner point of a tile are shifted so as be located to a different tile. This may happen in response to a modification of the electronic map data, which may be triggered based at least on coordinates established based at least on probe data that may originate from a vehicle fleet.

Alternatively or additionally, the first tile may have a first size (e.g., a first edge length), the second tile may have a second size (e.g., a second edge length), and the second size may be different from the first size.

Thereby, the plurality of tiles can be set up in such a way that a tile size is allowed to vary as a function of a location. The tile size can be a varying as a function of a density of map objects and, thus, as a function of geolocation. For illustration, the tile size can be larger in a region overlaying a sea there map objects are less densely packed, while the tile size can be smaller in another region that corresponds to an urban area in which map objects are more densely packed. This provides advantages with regard to access times and facilitates handling of map data, even when it can correspond to a large overall data amount: The plurality of tiles is defined in such a way (and the plurality of files can accordingly be set up in such a way) that each of the plurality of files stores a number of objects and/or has a file size that complies with a threshold criterion, facilitating the handling of and access operations to the plurality of files.

A quotient of the first size divided by the second size may be b", where b is a positive integer, and where n is a positive integer, a negative integer, or zero. The exponent n may be a positive integer or a negative integer.

Thereby, the plurality of tiles is set up in a structured manner that facilitates identification of and access to the first file, thereby allowing the object data to be retrieved in an efficient manner. The structure of such a tiling comprising the plurality of tiles also facilitates a dynamic adaptation of at least some of the tiles as electronic map data are modified (i.e., changed, added, or deleted), thereby allowing the processing system to ensure that the plurality of files complies with a size criterion that facilitates handling of the plurality of files while providing efficient access to the electronic map data.

The plurality of tiles may be configured such that, for any pair of tiles of the plurality of tiles, a quotient of edge lengths of the tiles of the pair are equal to b", where b is a positive integer, and where n is a positive integer, a negative integer, or zero.

Thereby, the plurality of tiles is set up in a structured manner that facilitates identification of and access to the first file, thereby allowing the object data to be retrieved in an efficient manner. The structure of such a tiling comprising the plurality of tiles also facilitates a dynamic adaptation of at least some of the tiles as electronic map data are modified (i.e., changed, added, or deleted), thereby allowing the processing system to ensure that the plurality of files complies with a size criterion that facilitates handling of the plurality of files while providing efficient access to the electronic map data.

The plurality of tiles may be configured such that the quotient is 2", where n is a positive integer, a negative integer, or zero.

Thereby, the plurality of tiles is set up in a structured manner that facilitates identification of and access thereto, allowing the object data to be retrieved in an efficient manner. The tiling defines a hierarchy corresponding to a quadtree structure that facilitates a dynamic adaptation of at least some of the tiles as electronic map data are modified (i.e., changed, added, or deleted), thereby allowing the processing system to ensure that the plurality of files complies with a size criterion that facilitates handling of the plurality of files while providing efficient access to the electronic map data.

The plurality of tiles may be non-overlapping, with adjacent tiles abutting along tile edges and/or at tile corners in a non-overlapping manner.

Thereby, a tiling can be used to provide structured storage of electronic map data that facilitates access to and/or modification of electronic map data.

The request may comprise a request to modify the object. Accessing the electronic map data may comprise generating, in response to the request, an updated first file from the first file and causing the updated first file to be stored.

Thereby, the method is operative to accommodate a modification of electronic map data, in a manner that provides efficient access. Moreover, generation of the updated first file ensures that historical electronic map data remains available. This also provides robustness in case an inconsistency is detected, as the processing system can revert to a historical version of the plurality of files.

Accessing the electronic map data may further comprise updating, in response to the request, the tile directory to reflect that the updated first file corresponds to a revision caused by the request.

Thereby, the tile directory reflects that the updated first file was generated and stored, providing effective accessibility of the electronic map data.

The request may comprise a request to modify coordinates of the object from first coordinates located in the first tile to modified coordinates located in a third tile different from the first tile.

Thereby, the method accommodates changes in the electronic map data that correspond to a change in coordinates of an already existing map object. The method in particular accommodates changes that cause coordinates to be shifted across tile boundaries. The method allows the change to be implemented without requiring any change in an object identifier of the object, by allowing a file to include a reference to object data in another file.

Accessing the electronic map data may further comprise generating an updated third file from a third file associated with the third tile and causing the updated third file to be stored, responsive to the request to modify the coordinates of the object. Alternatively or additionally, accessing the electronic map data may further comprise generating an updated second file from the second file associated with the second tile and causing the updated second file to be stored, responsive to the request to modify the coordinates of the object.

Thereby, the method accommodates changes in the electronic map data that correspond to a change in coordinates of an already existing map object. The method in particular accommodates changes that cause coordinates to be shifted across tile boundaries. The method allows the change in coordinates to be implemented while providing an effective retrieval of objects responsive to, e.g., a request specifying a geographic area, by allowing a file to include a reference to object data in another file.

Generating the updated third file may comprise including into the updated third file a reference to the updated first file.

Thereby, the method accommodates changes that cause coordinates to be shifted from the first tile to the third tile. The method allows the change in coordinates to be implemented while providing an effective retrieval of objects responsive to, e.g., a request specifying a geographic area, by generating the third file to include a reference to the first file from which the object data can then be retrieved.

Generating the updated first file may comprise updating version data and object coordinate data in the first file.

Thereby, the versioned electronic map data are updated so as to reflect that the first file was modified.

Accessing the electronic map data may comprise leaving an identifier for the object unchanged when generating the updated first file and the updated third file, the identifier allowing the first file to be identified in the plurality of files.

Thereby, the method provides efficient retrieval of electronic map data. Object identifiers may comprise a bit sequence that specifies a path through a hierarchical structure (e.g., a quadtree) representing the tiling to determine the first file to be accessed.

The identifier for the object may be a unique identifier, wherein the unique identifier for the object is different from all identifiers of objects other than the object stored in the electronic map data.

Thereby, object identifiers that uniquely identifies the objects may be set up in such a way that they comprise a bit sequence that specifies a path through a hierarchical structure (e.g., a quadtree) representing the tiling to determine the first file to be accessed.

Storing the updated first file may comprise storing the updated first file without overwriting or deleting the first file.

Thereby, the method is operative to implement a modification of electronic map data, in a manner that provides efficient access while at the same time ensuring that historical electronic map data remains available. This also provides robustness in case an inconsistency is detected, as the processing system can revert to a historical version of the plurality of files.

The request may comprise a data retrieval request originating from a map consumer.

Thereby, the method is operative to process the data retrieval request originating from the map consumer, allowing any one of or any combination of various electronic map-based-functions to be performed by the map consumer.

The data retrieval request may comprise boundary data specifying a closed boundary surrounding an area. Accessing the electronic map data may comprise identifying all objects that overlap with the area surrounded by the closed boundary.

Thereby, the processing system can process the data retrieval request to identify all objects overlapping with the area specified by the data retrieval request in an efficient manner. The structure of the electronic map data facilitates the identification of such objects in an efficient manner.

The output may be based at least on all objects that overlap with the area surrounded by the closed boundary.

Thereby, the processing system can provide the output as a response to the data retrieval request for use by the map consumer. The output may comprise the object data for all objects overlapping with the area surrounded by the closed boundary specified by the data retrieval request.

The output may comprise at least coordinates of all objects that overlap with the area surrounded by the closed boundary.

Thereby, the processing system can provide the output as a response to the data retrieval request for use by the map consumer. The output may comprise the object data for all objects overlapping with the area surrounded by the closed boundary specified by the data retrieval request.

The data retrieval request may comprise a membership request. Accessing the electronic map data may comprise identifying all objects stored in the electronic map data that that include a reference to (or comprise or otherwise include) the object specified in the membership request.

Thereby, the processing system can process the data retrieval request to identify all objects stored in the electronic map data of which an object specified in the membership request is a member. Thus, the method accommodates different types of queries for map data.

The processing system may be operative to support different types of map object definitions, such as a first type (e.g., for defining nodes of a navigable network), a second type (e.g., for defining links of the navigable network), and a third type (e.g., for defining information related to objects of the first or second types or of other objects of the third type). Map object definitions of the first type (e.g., "node type") may define coordinates (such as latitude and longitude, without being limited thereto) of the respective node. Map object definitions of the second type (e.g., "way type") may define at least which node(s) is/are part of a way. Map object definitions of a third type (which may also be referred to as relation) can define characteristics such as names that may be associated with objects of the first or second type or even the third type (such as a name of a point of interest (POI)) and can, thus, reference objects of any of the first, second, or third types. Accessing the electronic map responsive to the membership request may comprise identifying all objects that are referenced by (or part of or otherwise included in) an object definition of an object of the second or third object type.

Thereby, the processing system can process the data retrieval request to identify all objects stored in the electronic map data of which an object specified in the membership request is a member. Thus, the method accommodates different types of queries for map data.

Identifying all objects stored in the electronic map data that comprise the object may comprise accessing a membership data structure that specifies, for the object, all objects stored in the electronic map data that comprise the object.

Thereby, the processing system can process the data retrieval request to identify, in an efficient manner, all objects stored in the electronic map data that comprise the object. The processing system maintains the membership data structure to provide the output responsive to such a membership query in a time-efficient manner.

The output may be based at least on all objects that comprise the object.

Thereby, the processing system can provide the output as a response to the data retrieval request for use by the map consumer. The output may comprise identifiers, optionally coordinates or other information, for all objects that comprise the object.

The output may comprise at least identifiers and/or coordinates of all objects stored in the electronic map data that comprise the object.

Thereby, the processing system can provide the output as a response to the data retrieval request for use by the map consumer.

The versioned electronic map data may comprise a set of first files corresponding to different versions of the versioned electronic map data, the set of first files being associated with the first tile, the set of first files comprising the first file.

Thereby, the method provides the flexibility of accessing map versions that correspond to a point in time in the past and that are different from a most recent map version, while providing robustness against possible errors that may have occurred in updating map data. In particular, maintaining the historical map data makes it possible for the processing system to revert to a previous map version in response to detecting an inconsistency or other error, such as a referencing error.

The request may comprise time data and/or version data.

Thereby, the request may comprise a retrieval request specifying a time and/or version of the electronic map data, from which the object data are to be accessed. Accessing a historical electronic map data has various applications, such as for retrieving previous points of interest (POI) locations etc.

The method may comprise determining, based at least on the time data and/or the version data, the first file to be accessed.

Thereby, the processing system uses the time and/or version data included in the request to determine the first file, optionally also the second file, that is to be accessed responsive to the request. This facilitates access to historical versions of the electronic map data in an efficient manner.

The method may comprise determining, based at least on the tile directory and at least one of the time data and/or the version data, the first file to be accessed in the set.

Thereby, the processing system uses the tile directory in combination with the time and/or version data included in the request to determine the first file, optionally also the second file, that is to be accessed responsive to the request. This facilitates access to historical versions of the electronic map data in an efficient manner.

The tile directory may associate each tile with a most recent revision that caused an update of the tile and that precedes a generation or an update of the tile directory.

Thereby, the most recent version of files can be identified in an efficient manner by accessing the tile directory. This contributes to providing access to the electronic map data in an efficient manner.

The tile directory may comprise a hash table maintained in a memory of the processing system.

Thereby, the tile directory can be accessed in an efficient manner to retrieve the information on the file of files to be accessed. This contributes to providing access to the electronic map data in an efficient manner.

Performing the operation may comprise generating, by the processing system, output based at least on the object data.

Thereby, the processing system provides output that is dependent on the object data accessed responsive to the request. For a request that is or comprises a data retrieval request, the output may comprise the object data of at least one map object. For a request that is or comprises a request for modification of the electronic map data (such as by changing existing object data, adding you object data, or deleting existing object data), the output may comprise a confirmation confirming that the right operation was performed.

Performing the operation may comprise performing, by the processing system, an interface control operation based at least on the object data.

Thereby, the processing system provides output that is dependent on the object data accessed responsive to the request. For a request that is or comprises a data retrieval request, the output may comprise the object data of at least one map object. For a request that is or comprises a request for modification of the electronic map data (such as by changing existing object data, adding you object data, or deleting existing object data), the output may comprise a confirmation confirming that the right operation was performed.

The operation may comprise enabling, by the processing system, at least one map data-related function to be performed. The at least one map data-related function may comprise one, several, or all of the following: map data provision for use by a route search system; map data provision for use by a route guidance system; map data provision for use by a driver assistance system; map data provision for use by an advanced driver assistance system; map data provision for use by an autonomous vehicle system; map data updates; deployment of map data updates.

Thereby, the efficient access to the electronic map data afforded by the method can be beneficially utilized to enable performance of such map data -related functions. This improves the quality and safety of the vehicle operation, e.g. by enabling driver assistance, advanced driver assistance, and/or autonomous driving operations with a more efficient access to electronic map data.

Performing the operation may comprise performing, by the processing system and/or by a system or a device that is spaced from and operative to communicatively interface with the processing system, at least one map data-related function. The at least one map data-related function may comprise one, several, or all of the following: map data provision for use by a route search system; map data provision for use by a route guidance system; map data provision for use by a driver assistance system; map data provision for use by an advanced driver assistance system; map data provision for use by an autonomous vehicle system; map data updates; deployment of map data updates.

Thereby, the efficient access to the electronic map data afforded by the method can be beneficially utilized for performance of such map data -related functions. This improves the quality and safety of the vehicle operation, e.g. by enabling driver assistance, advanced driver assistance, and/or autonomous driving operations with a more efficient access to electronic map data.

According to an aspect of the invention, there is provided a vehicle control method of performing a vehicle control action. The vehicle control method comprises performing the method of performing a map data-related function according to an aspect or embodiment; receiving, by a system or device of a vehicle, output generated by the processing system; and performing, by the system or the device of the vehicle, at least one control action based at least on the output.

Thereby, the vehicle control method makes use of the method of performing a map data-related function, which provides access to the electronic map data in an efficient manner. This improves the quality and safety of the vehicle operation, e.g. by enabling driver assistance, advanced driver assistance, and/or autonomous driving operations with a more efficient access to electronic map data.

According to an aspect of the invention, there is provided map data generated using the method of any one of the preceding claims. The electronic map data may be obtained by accessing the electronic map data and generating, based at least on the request, at least one of the plurality of files.

Thereby, electronic map data obtained when executing the method according to an aspect or embodiment are provided. Such electronic map data, which comprises a plurality of tiles each associated with a tile of a tiling, provide the benefit of enabling access to the electronic map data in an efficient and versatile manner. The electronic map data are particularly useful to accommodate various types of requests, such as a request for all objects overlapping with an area surrounded by a closed boundary, identifying all objects that are a member of another object, or legacy requests for the object data. It will be appreciated that the electronic map data that result from, for example, a request that comprises a request for modifying the electronic map data have characteristic features that can be determined from the electronic map data themselves, namely that at least some of the plurality of files include one or several references to other files. In preferred embodiments, the electronic map data further comprises the tile directory, which includes information on the tiling as well as most recent file versions for various tiles of the tiling.

According to another aspect of the invention, there is disclosed machine-readable instruction code which, upon execution by at least one processing circuit, causes the at least one processing circuit to perform the method of any one aspect or embodiment.

Thereby, the technical effects disclosed in association with the method according to various embodiments is attained upon execution of the machine-readable instruction code.

According to another aspect of the invention, there is disclosed a data carrier comprising machine-readable instruction code which, when executed by at least one processing circuit, causes the at least one processing circuit to perform the method of any one aspect or embodiment.

Thereby, the data carrier includes the machine-readable instruction code that, upon execution, provides the technically effects disclosed in association with the method according to various embodiments.

The data carrier may comprise a non-transitory storage medium having stored thereon the machine-readable instruction code.

Thereby, the data carrier can be embodied as a physical object.

According to an aspect of the invention, there is provided a processing system for performing a map data-related function. The processing system comprises at least one data interface operative to receive a request. The processing system comprises at least one processing circuit operative to access electronic map data, wherein the electronic map data comprises a plurality of files storing object data of map objects located in a plurality of tiles, wherein different ones of the plurality of tiles are associated with different geographic regions of an area covered by the electronic map data. The at least one processing circuit is operative to perform the following, in order to access the electronic map data: accessing, based at least on the request, a tile directory; identifying, based at least on the request and the tile directory, a first file of the plurality of files; and accessing, based at least on the request, object data for an object in: the first file responsive to determining, by the processing system, that the object data is included in the first file; in a second file of the plurality of files responsive to determining, by the processing system, that the first file includes a reference to the second file for accessing the object data, the second file being different from the first file. The at least one processing circuit is operative to perform an operation based at least one the object data.

Various effects and advantages are attained by the processing system. The electronic map data are stored in a plurality of files, each of which is associated with a tile. Thus, the files are related to the different geographic regions. The processing system accommodates scenarios in which the object data is stored in a file (the second file) different from the first file to which the tile directory directs the access, with the first file including a reference to the second file and allowing the object data to be retrieved from the second file. This provides versatility in accommodating shifting geometries (which may be caused by, e.g., changes in node coordinates across tile boundaries) while allowing objects to be identified in a manner that directs the request to the first file, thereby obviating the need for deleting and re-creating an object if it is shifted across tile boundaries. The tile directory in association with the plurality of files, each of which related to a geographic region, also provides advantages with respect to access times. Thus, the processing system is operative to allow modification of and/or read access to the electronic map data in an efficient manner. The processing system provides benefits with regard to access times while at the same time providing enhanced versatility for modifying the electronic map data during operation of the processing system.

The processing system may be operative to perform the method of any aspect or embodiment disclosed herein.

According to a further aspect, there is provided a system which comprises the processing system and at least one map data consumer. The processing system is operative such that the at least one operation comprises an output operation to provide output for use by the at least one map data consumer.

Thereby, the output (e.g., map data) is made available for use by the electronic map data consumer. The electronic map data consumer may be or may comprise a device or vehicle system operative to perform, based at least on the output, one, several or all of a route search, a route guidance, a driver assistance function, an advanced driver assistance function, an automated driving function, a traffic flow control.

The at least one map data consumer may comprise a control circuit operative to control a vehicle actuator and/or a vehicle human machine interface based at least on the output.

Thereby, the output (e.g., an output stream providing map data) is used for performing vehicle- or other navigation-related functions.

The system may further comprise at least one map data source operative to generate a request comprising a request for modification of the electronic map data.

Thereby, the map data sources of data that cause modification of the electronic map data may be provided separately from the processing system. This facilitates the aggregation of data from different map data sources, which may be associated with different map layers, into the electronic map data.

The processing system may be operative to receive and process the request for modification of the electronic map data. The processing system may be operative to process the request for modification of the electronic map data such that one or several additional files are generated without overwriting or deleting a previously existing files.

Thereby, the processing system is operative to maintain versioned electronic map data.

Each of the map data sources may be associated with at least one (e.g., with exactly one) of several map layers.

Thereby, further enhanced flexibility is attained for modifying map data.

The map data sources may comprise at least one map data source operative to modify a map layer of the various map layers responsive to observations (e.g., of links of a navigable network, traffic signs, and/or traffic conditions) captured using sensing equipment. The sensing equipment may be installed in fleet of probes, such as vehicular probes.

Thereby, suitable modifications of map layers that improve the quality of the output (e.g., the accuracy of the output as compared to real-life infrastructure conditions) may be performed, e.g., automatically.

Methods of and processing systems of enabling access to electronic map data will be described in the following. These techniques may (but do not need to) be performed in combination with the methods of performing a map data-related function as disclosed herein.

According to an aspect of the invention, there is provided a method of enabling access to electronic map data. The method comprises determining, by a processing system, a hierarchical tile structure for storage of electronic map data, wherein the hierarchical tile structure comprises a plurality of tiles, the plurality of tiles covering a geographic coverage area of an electronic map. The method comprises generating, by the processing system, a plurality of files and causing the plurality of files to be stored. The processing system generates the plurality of files such that each of the plurality of files comprises object data for map objects located in an associated one of the plurality of tiles. Determining the hierarchical tile structure comprises determining, by the processing system, the hierarchical tile structure based at least on geolocations and storage space requirements of the map objects and based at least on a threshold criterion. The processing system determines the hierarchical structure such that each of the plurality of files complies with the threshold criterion when it comprises object data for a tile that is greater than a predetermined minimum tile size.

Various effects and advantages are attained by the method of enabling access to electronic map data. Generating the plurality of files such that there is a correspondence of map objects and geolocations, with each of the files being associated with a tile (and, thus, a geographic area), an efficient access is enabled that accommodated various queries, such as queries by object identifier and queries by geographic area. The threshold criterion enables generation of the plurality of files, each being associated with a tile of the hierarchical tile structure, in such a manner that efficient access is attained. The threshold criterion ensures that all files are in conformity with the threshold criterion when associated with a tile that does not have the minimum tile size (e.g., a minimum edge size). This provides efficient access by enabling the files respectively required for handling a query received by the processing system to be kept in memory, with an upper limit for the memory space and/or number of objects being known in advance by virtue of the threshold criterion.

Relaxing the threshold criterion for files associated with tiles having the minimum tile size (by not requiring such files to comply with the threshold criterion) allows object identifiers to comprise a bit sequence having a fixed length that uniquely specifies the tile (and, thus, the file corresponding thereto) to be accessed responsive to a request. Thus, handling of various types of queries is facilitated, providing efficient access that combines files that are associated with geographic regions, in a manner that accommodates spatially varying tile sizes.

The electronic map data may comprise or may be versioned electronic map data. The method may further comprise generating, by the processing system, a tile directory that comprises information on the tiling and, for each tile of the at least one tiling, version information to enable identification of a file of the plurality of files.

Thereby, an efficient access mechanism is provided even when versioned electronic map data are used. The versioned electronic map data provide the effect that historical versions of the electronic map data remain available. This may be useful for functions such as considering previous road network layouts, considering points of interest as located at a time in the past, or other functions that require knowledge of electronic map data as applicable at a time in the past. Moreover, the use of the versioned electronic map data provides robustness in the sense that it is possible to revert to a previous version that pre-dates a most recent version. This allows the processing system to undo some of the modifications of electronic map data that were implemented in the meantime. This may be done responsive to detecting, by the processing system, that there is a consistency issue or other issue (such as data integrity) with the most recent version of the electronic map data.

Determining the hierarchical tile structure may comprise determining, by the processing system, a depth of the hierarchical structure based at least on spatial variations in map object density. The depth may be in one-to-one correspondence with an edge length. Different depths may correspond to different edge lengths of tiles, with each depth corresponding to a single associated edge length and vice versa. The depth may be a positive integer indicating a number of nodes to be traversed on a tree, e.g., a quadtree, from a root of the tree to a leaf node of the tree.

Thereby, the plurality of tiles can be set up in such a way that a tile size is allowed to vary as a function of a location. The tile size can be a varying as a function of a density of map objects and, thus, as a function of geolocation. For illustration, the tile size can be larger in a region overlaying a sea there map objects are less densely packed, while the tile size can be smaller in another region that corresponds to an urban area in which map objects are more densely packed. This provides advantages with regard to access times and facilitates handling of map data, even when it can correspond to a large overall data amount: The plurality of tiles is defined in such a way (and the plurality of files can accordingly be set up in such a way) that each of the plurality of files stores a number of objects and/or has a file size that complies with a threshold criterion, facilitating the handling of and access operations to the plurality of files.

The processing system may determine the plurality of tiles such that, for any pair of tiles of the plurality of tiles, a quotient of edge lengths of the tiles of the pair are equal to bⁿ, where b is a positive integer, and where n is a positive integer, a negative integer, or zero.

Thereby, the plurality of tiles is set up in a structured manner that facilitates identification of and access to the first file, thereby allowing the object data to be retrieved in an efficient manner. The structure of such a tiling comprising the plurality of tiles also facilitates a dynamic adaptation of at least some of the tiles as electronic map data are modified (i.e., changed, added, or deleted), thereby allowing the processing system to ensure that the plurality of files complies with a size criterion that facilitates handling of the plurality of files while providing efficient access to the electronic map data.

The processing system may determine the plurality of tiles such that the quotient is 2", where n is a positive integer, a negative integer, or zero.

Thereby, the plurality of tiles is set up in a structured manner that facilitates identification of and access thereto, allowing the object data to be retrieved in an efficient manner. The tiling defines a hierarchy corresponding to a quadtree structure that facilitates a dynamic adaptation of at least some of the tiles as electronic map data are modified (i.e., changed, added, or deleted), thereby allowing the processing system to ensure that the plurality of files complies with a size criterion that facilitates handling of the plurality of files while providing efficient access to the electronic map data.

The processing system may determine the plurality of tiles such that they are non-overlapping, with adjacent tiles abutting along tile edges and/or at tile corners in a non-overlapping manner.

Thereby, a tiling can be used to provide structured storage of electronic map data that facilitates access to and/or modification of electronic map data.

The processing system may generate the hierarchical tile structure such that the tiles are non-overlapping and a quotient of tile sizes for different levels of the hierarchical tile structure is bⁿ, where b is a positive integer greater than one, and where n is a positive integer or a negative integer.

Thereby, the plurality of tiles is set up in a structured manner that facilitates identification of and access thereto, allowing the object data to be retrieved in an efficient manner. The tiling defines a hierarchy corresponding to a quadtree structure that facilitates a dynamic adaptation of at least some of the tiles as electronic map data are modified (i.e., changed, added, or deleted), thereby allowing the processing system to ensure that the plurality of files complies with a size criterion that facilitates handling of the plurality of files while providing efficient access to the electronic map data.

The processing system may be operative to enable the threshold criterion to be set.

Thereby, the processing system allows the generation of the plurality of files to be configured. This enables efficient access, taking into consideration the specifics of the processing system. For illustration, adjustability and configurability of the threshold criterion allows the threshold criterion to take into account a memory configuration of the processing system (e.g., a memory size), a memory access controller configuration, and/or a memory bus configuration. Thereby, efficient access can be attained taking into consideration the configuration of the processing system.

The threshold criterion may comprise a file size criterion.

Thereby, the processing system is operative to ensure that any file of the plurality of files not associated with a tile at the smallest tile size level has a file size that does not exceed a file size threshold. This facilitates access by providing an upper bound on the file size for any file not associated with a tile that has the smallest tile size supported by the processing system.

The threshold criterion may comprise an object count criterion.

Thereby, the processing system is operative to ensure that any file of the plurality of files not associated with a tile at the smallest tile size level stores data for a number of map objects that does not exceed an object count threshold. This facilitates access by providing an upper bound on number of objects for any file not associated with a tile that has the smallest tile size supported by the processing system.

The processing system may generate the hierarchical tile structure such that any tile greater than the predetermined minimum tile size in the hierarchical tile structure that is different from a root of the hierarchical tile structure has a size such that generation of a file storing the map objects of an ancestor tile in the hierarchical tile structure (i.e., a tile that is larger than and include the respective tile) would result in a file which violates the threshold criterion. I.e., the processing system may generate the hierarchical tile structure such that any tile greater than the predetermined minimum tile size in the hierarchical tile structure that is different from the root of the hierarchical tile structure is the largest tile that results in an associated file that complies with the threshold criterion.

Thereby, the processing system generates the plurality of files in a manner that provides efficient access to the electronic map data while facilitating maintenance of the plurality of files by the processing system. The hierarchical tile structure and, thus, the plurality of files are set up in such a manner by the processing system that any file that is not associated with a tile having the predetermined minimum tile size complies with the threshold criterion while being the respective tile is the largest such tile for which the file complies with the threshold criterion. Thereby, compliance with the threshold criterion at any level that does not correspond to the minimum tile size is ensured while keeping the tiles as large as possible while ensuring conformity with the threshold criterion.

The processing system may generate the hierarchical tile structure such that any tile greater than the predetermined minimum tile size in the hierarchical tile structure fulfills one of the following conditions: it is a root of the hierarchical tile structure; generation of a file storing the map objects of an ancestor tile in the hierarchical tile structure would result in a file which violates the threshold criterion.

Thereby, the processing system generates the plurality of files in a manner that provides efficient access to the electronic map data while facilitating maintenance of the plurality of files by the processing system. The hierarchical tile structure and, thus, the plurality of files are set up in such a manner by the processing system that any file that is not associated with a tile having the predetermined minimum tile size complies with the threshold criterion while being the respective tile is the largest such tile for which the file complies with the threshold criterion. Thereby, compliance with the threshold criterion at any level that does not correspond to the minimum tile size is ensured while keeping the tiles as large as possible while ensuring conformity with the threshold criterion.

The method may further comprise: receiving, by the processing system, at least one message indicating a modification of the versioned electronic map data. Generating the plurality of files may comprise generating, by the processing system in response to the at least one message, an updated file from at least one file of the plurality of files and causing storage of the updated file, wherein the updated file is based at least on the modification.

Thereby, the processing system can handle messages that cause a modification (such as by change of an existing object, adding a new object, or deleting an existing object) of the electronic map data. The method is operative to accommodate a modification of electronic map data, in a manner that provides efficient access. Moreover, generation of the updated first file ensures that historical electronic map data remains available. This also provides robustness in case an inconsistency is detected, as the processing system can revert to a historical version of the plurality of files.

Generating the tile directory may comprise retrieving and updating a version of the tile directory prior to the modification such that the tile directory indicates that the tile with which the updated file version is associated has been affected by a modification request.

Thereby, the tile directory reflects that the updated file was generated and stored, providing effective accessibility of the electronic map data.

The tile directory may associate each tile with a most recent revision that caused an update of the tile and that precedes a generation or an update of the tile directory.

Thereby, the most recent version of files can be identified in an efficient manner by clearing the tile directory. This contributes to providing access to the electronic map data in an efficient manner.

The tile directory may comprise a hash table maintained in a memory of the processing system.

Thereby, the tile directory can be accessed in an efficient manner to retrieve the information on the file of files to be accessed. This contributes to providing access to the electronic map data in an efficient manner.

The processing system may cause the updated file version of the at least one file to be stored in addition to the at least one file.

Thereby, historical electronic map data remains available. This also provides robustness in case an inconsistency is detected, as the processing system can revert to a historical version of the plurality of files.

The modification may comprise one of: an addition of a new map object; a change to an existing map object; a deletion of an existing map object.

Thereby, the processing system is operative such that various modifications of electronic map data are accommodated, in a manner that causes the generation of the hierarchical tile structure to be repeated when necessary to ensure continued conformity with the threshold criterion.

The at least one message may indicate a geolocation change from a first geolocation overlapping with a first tile to a third geolocation overlapping with one or several third tiles. Updating the plurality of files may comprise: generating an updated first file from a first file of the plurality of files, wherein the first file is associated with the first tile and wherein the updated first file comprises data specifying the third geolocation; and generating an updated version of each of one or several third files of the plurality of files. Each of the one or several third files may be associated with an associated one of the one or several third tiles. Generating the updated version of each of one or several third files comprises writing a reference to the first tile to each of one or several third files.

Thereby, the method accommodates changes in the electronic map data that correspond to a change in coordinates of an already existing map object. The method in particular accommodates changes that cause coordinates to be shifted across tile boundaries. The method allows the change in coordinates to be implemented while providing an effective retrieval of objects responsive to, e.g., a request specifying a geographic area, by allowing a file to include a reference to object data in another file.

The method may further comprise modifying, by the processing system, the hierarchical tile structure responsive to determining that the modification necessitates tile splitting or tile merging for continued conformity with the threshold criterion.

Thereby, the method accommodates changes in the electronic map data while ensuring continued conformity with the threshold criterion by triggering tile splitting and/or tile merging responsive to requests for modification of the electronic map data. This provides enhanced access to the electronic map data and improves the modification process of the electronic map data.

Each of the map data sources may be associated with at least one (e.g., with exactly one) of several map layers.

Thereby, further enhanced flexibility is attained for modifying map data.

The map data sources may comprise at least one map data source operative to modify a map layer of the various map layers responsive to observations (e.g., of links of a navigable network, traffic signs, and/or traffic conditions) captured using sensing equipment. The sensing equipment may be installed in fleet of probes, such as vehicular probes.

Thereby, suitable modifications of map layers that improve the quality of the output (e.g., the accuracy of the output as compared to real-life infrastructure conditions) may be performed, e.g., automatically.

The method may be or may comprise an initial generation of the plurality of files and of the hierarchical tile structure to enable the access to the electronic map data.

Thereby, the method is operative to generate the plurality of files storing the electronic map data therein, in a manner that provides efficient access to the electronic map data for retrieval and/or modification of object data comprised by the electronic map.

The method may be or may comprise a modification of the electronic map data that has previously been generated. The modification may comprise the generation of additional files and/or a modification of the hierarchical tile structure by way of tile merger or tile splitting.

Thereby, the method is operative to maintain the plurality of files storing the electronic map data therein as the electronic map data continues to be modified. The plurality of files and the hierarchical tile structure continues to provide efficient access to the electronic map data for retrieval and/or modification of object data comprised by the electronic map. The hierarchical tile structure is modified as appropriate to ensure continued conformity with the threshold criterion for any tile having a size greater than the predetermined minimum tile size.

The method may further comprise enabling, by the processing system, access to the versioned electronic map data for performance of a map data-based function responsive to a request.

Thereby, the processing system provides access to the electronic map data that is stored in a manner that enables efficient access.

Enabling access may comprise accessing the tile directory to identify at least one file to be accessed, accessing the at least one file to retrieve object data for one or several map objects, and generating output based at least on the object data.

Thereby, the processing system provides access to the electronic map data in an efficient manner.

Enabling the access may comprise generating, by the processing system, output based at least on object data retrieved from the plurality of files.

Thereby, the processing system provides output that is dependent on the object data accessed responsive to the request. For a request that is or comprises a data retrieval request, the output may comprise the object data of at least one map object. For a request that is or comprises a request for modification of the electronic map data (such as by changing existing object data, adding you object data, or deleting existing object data), the output may comprise a confirmation confirming that the right operation was performed.

The method may comprise performing, by the processing system, an interface control operation based at least on the object data.

Thereby, the processing system provides output that is dependent on the object data accessed responsive to the request. For a request that is or comprises a data retrieval request, the output may comprise the object data of at least one map object. For a request that is or comprises a request for modification of the electronic map data (such as by changing existing object data, adding you object data, or deleting existing object data), the output may comprise a confirmation confirming that the right operation was performed.

The method may comprise enabling, by the processing system, at least one map data-related function to be performed. The at least one map data-related function may comprise one, several, or all of the following: map data provision for use by a route search system; map data provision for use by a route guidance system; map data provision for use by a driver assistance system; map data provision for use by an advanced driver assistance system; map data provision for use by an autonomous vehicle system; map data updates; deployment of map data updates.

Thereby, the efficient access to the electronic map data afforded by the method can be beneficially utilized to enable performance of such map data -related functions. This improves the quality and safety of the vehicle operation, e.g. by enabling driver assistance, advanced driver assistance, and/or autonomous driving operations with a more efficient access to electronic map data.

The method may comprise performing, by the processing system and/or by a system or a device that is spaced from and operative to communicatively interface with the processing system, at least one map data-related function. The at least one map data-related function may comprise one, several, or all of the following: map data provision for use by a route search system; map data provision for use by a route guidance system; map data provision for use by a driver assistance system; map data provision for use by an advanced driver assistance system; map data provision for use by an autonomous vehicle system; map data updates; deployment of map data updates.

Thereby, the efficient access to the electronic map data afforded by the method can be beneficially utilized for performance of such map data -related functions. This improves the quality and safety of the vehicle operation, e.g. by enabling driver assistance, advanced driver assistance, and/or autonomous driving operations with a more efficient access to electronic map data.

According to an aspect of the invention, there is provided a vehicle control method of performing a vehicle control action. The vehicle control method comprises the method of enabling access to electronic map data according to an aspect or embodiment; receiving, by a system or device of a vehicle, output generated by the processing system based at least on the plurality of files; and performing, by the system or the device of the vehicle, at least one control action based at least on the output.

Thereby, the vehicle control method makes use of the method of enabling access, which provides access to the electronic map data in an efficient manner. This improves the quality and safety of the vehicle operation, e.g. by enabling driver assistance, advanced driver assistance, and/or autonomous driving operations with a more efficient access to electronic map data.

According to an aspect of the invention, there is provided map data generated using the method of enabling access of any one of the preceding claims. The electronic map data may be obtained by the initial generation of the hierarchical tile structure and the plurality of files, or by a modification of the hierarchical tile structure and the plurality of files as generated by the processing system.

Thereby, electronic map data obtained when executing the method according to an aspect or embodiment are provided. Such electronic map data, which comprises a plurality of tiles each associated with a tile of a tiling, provide the benefit of enabling access to the electronic map data in an efficient and versatile manner. The electronic map data are particularly useful to accommodate various types of requests, such as a request for all objects overlapping with an area surrounded by a closed boundary, identifying all objects that are a member of another object (with the latter being specified in the data retrieval request), or legacy requests for the object data. It will be appreciated that the electronic map data that result from, for example, a request that comprises a request for modifying the electronic map data have characteristic features that can be determined from the electronic map data themselves, namely that at least some of the plurality of files include one or several references to other files. In preferred embodiments, the electronic map data further comprises the tile directory, which includes information on the tiling as well as information on most recent file versions for various tiles of the tiling.

According to another aspect of the invention, there is disclosed machine-readable instruction code which, upon execution by at least one processing circuit, causes the at least one processing circuit to perform the method of any one aspect or embodiment.

Thereby, the technical effects disclosed in association with the method according to various embodiments is attained upon execution of the machine-readable instruction code.

According to another aspect of the invention, there is disclosed a data carrier comprising machine-readable instruction code which, when executed by at least one processing circuit, causes the at least one processing circuit to perform the method of any one aspect or embodiment.

Thereby, the data carrier includes the machine-readable instruction code that, upon execution, provides the technically effects disclosed in association with the method according to various embodiments.

The data carrier may comprise a non-transitory storage medium having stored thereon the machine-readable instruction code.

Thereby, the data carrier can be embodied as a physical object.

According to an aspect of the invention, there is provided processing system for enabling access to electronic map data. The processing system comprises at least one processing circuit operative to determine a hierarchical tile structure for storage of electronic map data, wherein the hierarchical tile structure comprises a plurality of tiles, the plurality of tiles covering a geographic coverage area of an electronic map. The at least one processing circuit is operative to generate a plurality of files and causing the plurality of files to be stored. The at least one processing circuit is operative to generate the plurality of files such that each of the plurality of files comprises object data for map objects located in an associated one of the plurality of tiles. The at least one processing circuit is operative such that, to determine the hierarchical tile structure comprises, the at least one processing circuit determines the hierarchical tile structure based at least on geolocations and storage space requirements of the map objects and based at least on a threshold criterion. The at least one processing circuit is operative to determine the hierarchical structure such that each of the plurality of files complies with the threshold criterion when it comprises object data for a tile that is greater than a predetermined minimum tile size.

Various effects and advantages are attained by the processing system for enabling access to electronic map data. Generating the plurality of files such that there is a correspondence of map objects and geolocations, with each of the tiles being associated with a tile (and, thus, a geographic area), an efficient access is enabled that accommodated various queries, such as queries by object identifier and queries by geographic area. The threshold criterion enables generation of the plurality of files, each being associated with a tile of the hierarchical tile structure, in such a manner that efficient access is attained. The threshold criterion ensures that all files are in conformity with the threshold criterion when associated with a tile that does not have the minimum tile size (e.g., a minimum edge size). This provides efficient access by enabling the files respectively required for handling a query received by the processing system to be kept in memory, with an upper limit for the memory space and/or number of objects being known in advance by virtue of the threshold criterion.

Relaxing the threshold criterion for files associated with tiles having the minimum tile size (by not requiring such files to comply with the threshold criterion) allows object identifiers to comprise a bit sequence having a fixed length that uniquely specifies the tile (and, thus, the file corresponding thereto) to be accessed responsive to a request. Thus, handling of various types of queries is facilitated, providing efficient access that combines files that are associated with geographic regions, in a manner that accommodates spatially varying tile sizes.

Optional features of the processing system and the effects attained thereby correspond to optional features of the method of enabling access to electronic map data according to any one of the various aspects or embodiments disclosed herein.

The processing system may be operative to perform the method of enabling access to electronic map data according to any one of the various aspects or embodiments disclosed herein.

The processing system for enabling access to the electronic map data may comprise at least one interface operative to communicatively interface the processing system with one or several map data source(s) and/or one or several map data consumer(s).

According to a further aspect, there is provided a system which comprises the processing system for enabling access to electronic map data and at least one map data consumer. The processing system is operative to perform an output operation to provide output for use by the at least one map data consumer.

Thereby, the output (e.g., part of the electronic map data) is made available for use by the electronic map data consumer. The electronic map data consumer may be or may comprise a device or vehicle system operative to perform, based at least on the output, one, several or all of a route search, a route guidance, a driver assistance function, an advanced driver assistance function, an automated driving function, a traffic flow control.

The at least one map data consumer may comprise a control circuit operative to control a vehicle actuator and/or a vehicle human machine interface based at least on the output.

Thereby, the output (e.g., an output stream providing map data) is used for performing vehicle- or other navigation-related functions.

The system may further comprise at least one map data source operative to generate a request comprising a request for modification of the electronic map data.

Thereby, the map data source(s) of data that cause modification of the electronic map data may be provided separately from the processing system. This facilitates the aggregation of data from different map data sources, which may be associated with different map layers, into the electronic map data.

The processing system may be operative to receive and process the request for modification of the electronic map data. The processing system may be operative to process the request for modification of the electronic map data such that one or several additional files are generated without overwriting or deleting a previously existing files.

Thereby, the processing system is operative to maintain versioned electronic map data.

Each of the map data sources may be associated with at least one (e.g., with exactly one) of several map layers.

Thereby, further enhanced flexibility is attained for modifying map data.

The map data sources may comprise at least one map data source operative to modify a map layer of the various map layers responsive to observations (e.g., of links of a navigable network, traffic signs, and/or traffic conditions) captured using sensing equipment. The sensing equipment may be installed in fleet of probes, such as vehicular probes.

Thereby, suitable modifications of map layers that improve the quality of the output (e.g., the accuracy of the output as compared to real-life infrastructure conditions) may be performed, e.g., automatically.

The methods of and processing systems for enabling access to electronic map data may be operative to perform the method of performing an electronic map-data related function according to any aspect or embodiment disclosed herein. Thus, the techniques of enabling access to electronic map data may (but do not need to) be performed in combination with the methods of performing a map data-related function as disclosed herein.

While the techniques disclosed herein may be used for navigation, route search, driver assistance and autonomous driving functions, they are not limited thereto.

### BRIEF DESCRIPTION OF THE DRAWINGS

Embodiments of the invention will be described with reference to the drawings in which similar or corresponding reference signs designate elements having similar or corresponding configuration and/or function.
Fig. 1 is a schematic representation of a system comprising a processing system operative to enable access to electronic map data and/or performance of a map data-related function.
Fig. 2 is a schematic representation of a tiling and a plurality of files.
Fig. 3 is a schematic representation of the tiling and the plurality of files.
Fig. 4 is a schematic representation of part of the tiling and a sub-set of the plurality of files.
Fig. 5 is a schematic representation of an object identifier and its association with the tiling.
Fig. 6 is a schematic representation of a quadtree representing the tiling.
Fig. 7 is a schematic representation illustrating operation of the processing system.
Fig. 8 is a schematic representation of a tile directory.
Fig. 9 is a flow chart of a method.
Fig. 10 is a flow chart of a method.
Fig. 11 is a schematic representation of a subset of a plurality of tiles.
Fig. 12 is a further schematic representation of the subset.
Fig. 13 is a yet further schematic representation of the subset.
Fig. 14 is a flow chart of a method.
Fig. 15 is a schematic representation of objects of electronic map data to illustrate generation and/or adaptation of the tiling.
Fig. 16 is a schematic representation of a threshold criterion.
Fig. 17 is a block diagram representation of processing circuit(s) of the processing system.
Fig. 18 is a signal flow diagram for a system comprising the processing system.
Fig. 19 is a signal flow diagram for a system comprising the processing system.
Fig. 20 is a flow chart of a method.
Fig. 21 is a schematic block diagram representation of the processing system.
Fig. 22 is a flow chart of a method.
Fig. 23 is a schematic representation of modifications of electronic map data and the associated modifications of a tile directory.
Fig. 24 is a schematic representation of the tiling.
Fig. 25 is a flow chart of a method.
Fig. 26 is a schematic representation of a tile of the tiling and files used to store the electronic map data.
Fig. 27 is a flow chart of a method.
Fig. 28 is a flow chart of a method.
Fig. 29 is a flow chart of a method.
Fig. 30 is a schematic representation of a tiling.
Fig. 31 is a schematic representation of a system comprising the processing system.
Fig. 32 is a schematic representation of a system comprising the processing system.
Fig. 33 is a flow chart of a method.
Fig. 34 is a flow chart of a method.

### DETAILED DESCRIPTION OF EMBODIMENTS

Embodiments of the invention will be described in detail. While some embodiments will be described in association with specific exemplary map layers, the embodiments are not limited thereto.

The features of embodiments may be combined with each other unless specifically stated otherwise.

The techniques disclosed herein in detail may be used to in association with electronic map data. The techniques disclosed herein are operative to enable access to the electronic map data and/or enable a map data-based function to be performed. In some embodiments, the method and/or processing system uses a hierarchical tiling that comprises tiles of several different sizes, with the tiling being set up in such a way that geolocations are taken into consideration for storing object data while, at the same time, the object data can be accessed in an efficient manner.

As used herein, a "tiling" refers to a plurality of tiles that, in combination, cover a target region. Adjacent tiles may abut on each other along edges and/or at corners, while being non-overlapping with each other but for the edges and/or corners. The tiling may be defined such that, while tiles are allowed to have different sizes, a quotient of any pair of edge lengths of any pair of tiles is equal to b" where b is a positive integer greater than one and n can be a positive integer, a negative integer, or zero, depending on the pair of tiles for which the quotient is determined. The tiling may be in particular be defined such that, while tiles are allowed to have different sizes, a quotient of any pair of edge lengths of any pair of tiles is equal to 2" where n can be a positive integer, a negative integer, or zero, depending on the pair of tiles for which the quotient is determined.

The method and processing system may be operative to support tiles from a maximum tile size to a minimum tile size. The maximum tile size may have a maximum tile size edge length at equator (e.g., an edge length of a square tile shape at the Earth's equator) that is 40 km or more, 80 km or more, 160 km or more, or 320 km or more. The minimum tile size may have a minimum tile size edge length (e.g., an edge length of a square tile shape) that is 600 m or less, 300 m or less, 150 m or less, or 75 m or less. The method and processing system may be operative to operate with a tiling comprising a plurality of tiles, wherein the plurality of tiles has a maximum edge length (e.g., for a square shape) that is 40 km or more and a minimum edge length (e.g., for a square shape) that is 600 m or less; a maximum edge length (e.g., for a square shape) that is 80 km or more and a minimum edge length (e.g., for a square shape) that is 300 m or less; a maximum edge length (e.g., for a square shape) that is 160 km or more and a minimum edge length (e.g., for a square shape) that is 150 m or less; a maximum edge length (e.g., for a square shape) that is 320 km or more and a minimum edge length (e.g., for a square shape) that is 75 m or less. The method and processing system may be operative such that tile sizes of the plurality of tiles vary as a function of geolocation, while the plurality of tiles continually cover a region such that any point located within that region is included in one, and only one, tile. The structure of the tiling makes it possible that a hierarchical tile structure be specified that determines a path from a root to a leaf of the hierarchical structure, to thereby determine one or several files to be accessed responsive to a message received by the processing system.

It is possible but not required for object data related to a map object to be stored only in the tile that corresponds to the geolocations of the object. For illustration, a change in geocoordinates of an object may correspond to a shift across tile boundaries. In such cases, the object data may continue to be stored in a file that is associated with the tile in which the object was previously located, with a reference being added to the file that corresponds to another tile in which the new geocoordinates are located. As a further example, a map object may extend across several tiles. In such a case, the entire geometry may be stored in the file corresponding to one of the several tiles, thereby serving as an anchor, with references being included in the other tiles. Thus, while the processing system and method utilize an association of geolocation and files, it is possible and beneficial for the processing system and method to accommodate the use of references to other tiles, e.g., in the scenarios mentioned previously herein.

As used herein, the term "hierarchical tile structure" refers to a structure that may in particular comprise or be a quadtree or another decision tree structure. The hierarchical tree structure may be set up such that, for any object of the electronic map data, a bit sequence included in a unique object identifier for that object defines a path through the hierarchical tile structure that determines which file(s) are to be accessed to obtain the object data for the respective object.

The method and processing system may be operative such that object data relating to map objects of the electronic map are stored in a "plurality of files." Each of the plurality of files may be associated with one, and only one, of the plurality of tiles. More than two files may be associated with the same tile, for example they may relate to different versions of the electronic map for that respective tile.

As used herein, a "object data" refers to data related to a map object. The object data may comprise or may be a map object definition. The processing system and method may be operative to support different types of map object definitions, such as a first type (e.g., for defining nodes of a navigable network), a second type (e.g., for defining links of the navigable network), and a third type (e.g., for defining information related to objects of the first or second types or of other objects of the third type). Map object definitions of the first type (e.g., "node type") may define coordinates (such as latitude and longitude, without being limited thereto) of the respective node. Map object definitions of the second type (e.g., "way type") may define at least which node(s) is/are part of a way; it is noted that a "way" can also reasonably be defined by a single node, optionally in association with attributes, e.g., when the way defines a turning area or roundabout. Map object definitions of a third type (which may also be referred to as relation) can define characteristics such as names that may be associated with objects of the first or second type or even the third type (such as a name of a point of interest (POI)) and can, thus, reference objects of any of the first, second, or third types. Other map object definitions may be used.

As used herein, a "version" or "versioned" means that the respective entity is provided with regard to different points in time. Information on a version may be specified as a point of time (e.g., relative to a system time source) and/or a version number. The processing system and method may be operative such that versioned electronic map data is stored in the plurality of files, with different files having different versions (e.g., different points in time in which they were last updated and/or different version numbers). Thus, the processing system and method may be operative to update electronic map data such that a given file for storing object data for a given tile may have a version number and/or most recent update time different from that of another given file for storing object data for another given tile different from the given tile. The versioned electronic map data may include not only the most recent version, but also previous versions. This provides robustness and allows reestablishing data consistency in case an error is detected in the most recent version.

As used herein, a "processing system" operative to maintain and/or enable access to electronic map data may be implemented as a distributed system, e.g., as a distributed architectures to handle requests for object data and/or requests for modifying object data.

The processing system and method may be operative to process various types of requests. For illustration, the structure and operation of the processing system and method may accommodate at least one, several, or all of: requests for object data based at least on a unique object identifier; queries for object data of objects located within an area surrounded by a closed boundary specified in the request (such as "bounding box" queries); requests for data specifying all map objects of which an object specified in the request is a member (such as "membership" queries).

As used herein, an "output" may comprise an output provided via a data interface. The output may comprise an output to a map data consumer.

As used herein, a "map data consumer" refers to any device or system operative to process electronic map data to perform an action. Examples for map data consumers include portable communication terminals (such as smartphones), vehicle processing systems, vehicles, navigation devices, wearables, without being limited thereto. The electronic map data consumer may be operative to perform a control action to control, e.g., a vehicle actuator and/or a human machine interface (HMI).

As used herein, a "map data provision system" or "map data source" operates as sources for changes of electronic map data. The map data provision systems may but do not need to be implemented in separate hardware. The map data provision systems may be implemented in a distributed architecture.

As used herein, a "modification" may comprise or may be either one of an addition of a new map object definition, a deletion of an existing map object definition, the change of an existing map object definition.

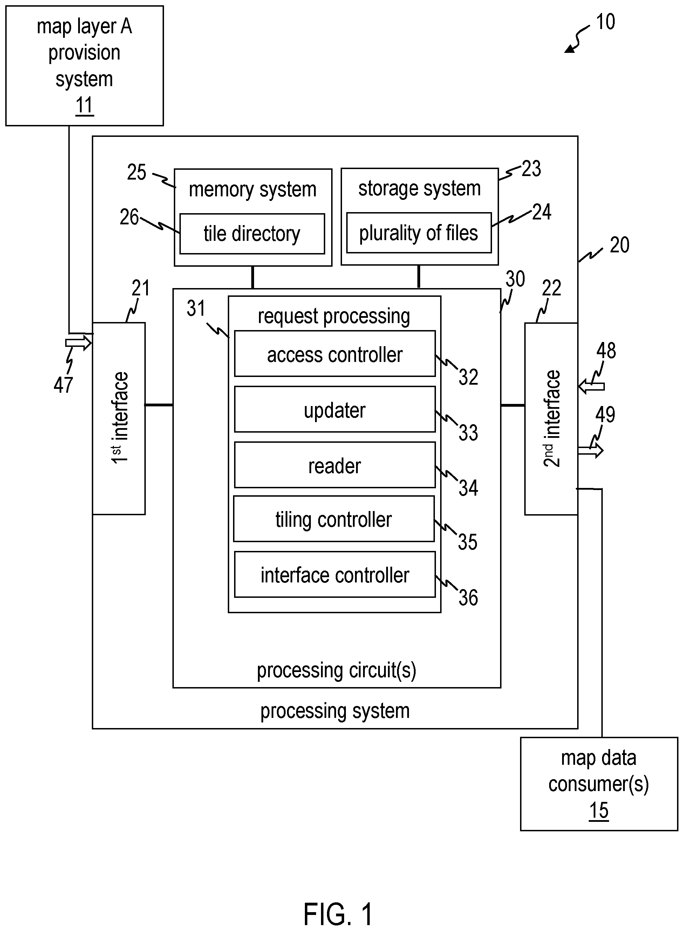

Fig. 1 is a schematic representation of a system 10. The system 10 comprises a processing system 20 operative to perform a method of performing a map data-related function and/or enabling access to electronic map data.

The processing system 20 comprises at least one interface 21, 22 operative to receive messages originating from one or several map data sources 11 and/or one or several map data consumers 15. The messages 47, may comprise requests 47, for modification of electronic map data. Alternatively or additionally, the processing system 20 may be operative to process requests 48 originating from the map data consumers 15.

The processing system 20 comprises a storage system 23. The storage system 23 stores wherein a plurality of files 24, each of which is associated with a tile of a plurality of tiles. At any given point in time, the plurality of tiles covers a region in a contiguous manner such that any point within the region is located within a single one of the plurality of tiles. Each of the files 24 is associated with a single one of the plurality of tiles. Each one of the plurality of files 24 has stored therein object data for map objects that are presently located within the tile, that were previously located within the tile, that extend into or from the respective tile, or that previously extended into or from the respective tile. The object data may comprise object definitions. The object definitions may comprise object definitions for nodes, for ways, and/or for relations. Ways or relations may respectively comprise one or several nodes. The electronic map data may comprise versioned electronic map data, with there being several file versions for the same tile. Modification of object data may result in generation and storage of a new file, without overwriting the already existing files for the same tile.

The processing system 20 comprises a memory system 25. The memory system 25 may comprise or may be a random access memory (RAM). The memory system 25 has stored therein a tile directory 26. The tile directory 26 provides, for any tile, information on a most recent version of the file associated with the respective tile that precedes a generation of the tile directory 26. Since the tile directory provides a list of the tiles (at a certain moment), it also identifies the tiling. Different versions of the tile directory can be provided as described in detail herein, to provide a list of the tiles at several points in time. The tile directory 26 may comprise or may be in-memory hash data, such as a hash table that is in memory. Thereby, particularly efficient access may be attained. Modifications of the electronic map data may result in a modifications of the tile directory 26. It is possible, but not required that the tile directory 26 is updated whenever the electronic map data in the plurality of files 24 are updated. Preferably, the tile directory 26 is updated by the at least one processing circuit 30 in intervals that are configurable, e.g., after the lapse of a configurable time interval and/or after a configurable number of modifications of the electronic map data stored in the storage system 23.

The processing system 20 comprises at least one processing circuit 30 operative to process the messages 47, 47', 48 for performance of at least one map data-related function and/or for enabling access to electronic map data. The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto. The at least one processing circuit 30 is operative to perform the operations described herein.

The at least one processing circuit 30 is operative to perform a request processing 31 to process requests 47, 47' for modification of the electronic map data and/or requests 48 for retrieval of parts of the electronic map data or information generated based thereon.

The at least one processing circuit 30 is operative to implement an access controller 32 to control access to the electronic map data and the plurality of files 24. The access controller 32 may be operative to determine, responsive to a request 47, 47', 48, which one or which ones of the plurality of files 24 are to be accessed. The access controller 32 may be operative to determine, based at least on the tile directory 26, which file(s) and which file version(s) are to be accessed. The access controller 32 may be operative to access, based at least on the version information from the tile directory 26 and the request 47, 47', 48, at least a first file of the plurality of files 24, the first file having a version determined based at least on the version information in the tile directory 26. Responsive to determining, by the access controller 32, that the first file comprises a reference to at least one second file that is different from and corresponds to a different tile than the first file, the access controller 32 access is the at least one second file to retrieve object data therefrom. As previously explained, the access controller 32 may determine the file version to be accessed based at least on the tile directory 26. The access controller 32 may be operative to perform these operations of identifying the file or the files to be accessed, based at least on the tile directory and the request 47, 47', 48, irrespective of whether the at least one processing circuit 30 processes a request 47, 47' for modification of the electronic map data or a request 48 for retrieval of electronic map data.

The at least one processing circuit 30 is operative to implement an updater 33. The updater 33 is operative to generate, responsive to a request 47, 47' for modification of the electronic map data, the at least one additional file for storage in the plurality of files 24. The updater 33 is operative to interact with the access controller 32, with the access controller 32 determining from which files of the plurality of files 24 data are to be read for inclusion into new files to be generated. The updater 33 may be operative to generate several additional files responsive to a request for modification of an object that causes object coordinates to shifted across a tile boundary, the object data being stored in a file that is associated with the tile in which the object was located initially and prior to the change in object coordinates, and a reference to the file being stored in another file that is associated with another tile in which the object coordinates are located after they have been shifted across the tile boundary. The updater 33 may also be operative to maintain a record of changes in file versions, which record may be kept in the memory system 25, and/or to update the tile directory 26 responsive to detecting that an update criterion for updating the tile directory 26 is fulfilled. The updater 33 may be operative to interact with an interface controller 36 to cause issuance of output confirming that the electronic map data was updated.

The at least one processing circuit 30 is operative to implement a reader 34. The reader 34 is operative to retrieve, responsive to a request 48 for electronic map data, electronic map data from the plurality of files 24. The reader 34 may be operative to handle various types of requests, such as any one or any combination of: requests for object data for an object, with the unique object identifier being included in the request; requests for object data of objects located within a closed boundary, with the request including information on the closed boundary; requests for all objects of which an object is a member, with the unique object identifier being included in the request. The reader 34 may be operative to interact with the access controller 32 to determine which file or which files are to be accessed to retrieve the respective data. The reader 34 may be operative to interact with the interface controller 36 to cause generation and outputting of the output 49. The output 49 may comprise data retrieved responsive to the request 48. The at least one processing circuit 30 may be operative to generate and provide the output 49 for transmission to and/or for use by the map consumer 15 from which the request 48 originates.

The at least one processing circuit 30 is operative to implement a tiling controller 35. The tiling controller 35 is operative to control the changes to be made to the tiling, triggering the updater 33 to change the plurality of files 24 in accordance with the change is determined for the tiling. The tiling controller 35 may be operative to determine, based at least on a threshold criterion (such as a threshold on file size and/or a threshold on a number of objects to be stored for each tile), whether a tile splitting must be made and/or whether a tile merging is possible. Responsive to tile splitting and/or tile merging, the plurality of files 24 are updated in accordance with the modified tiling. The tile directory is also updated. As will be explained in more detail below, the tiling is thereby maintained in such a manner that it has a hierarchical tile structure that ensures that each of the plurality of files that is not associated with a minimum tile size supported by the processing system 20 complies with the threshold criterion. The tiling may further be maintained in such a manner that the hierarchical tile structure ensures that the tiles are respectively the largest tiles that maintain the quadtree structure while ensuring that each of the plurality of files that is not associated with the minimum tile size supported by the processing system 20 complies with the threshold criterion.

The at least one processing circuit 30 is operative to implement the interface controller 36. The interface controller 36 may be operative to control the at least one interface 21, 22 to provide output 49, e.g., responsive to a request 48 for electronic map data.

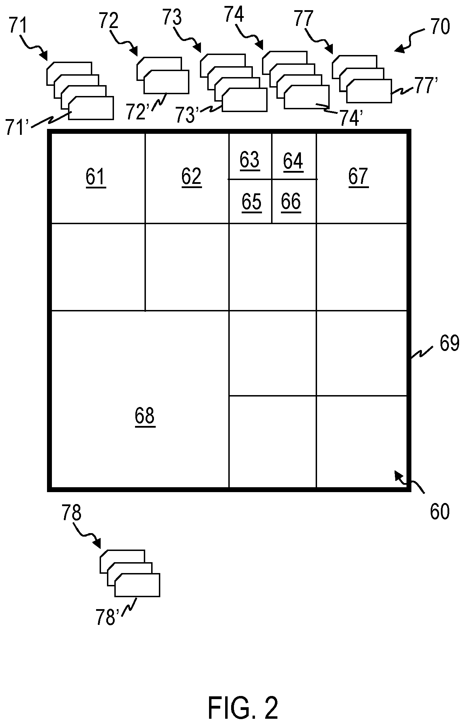

Fig. 2, Fig. 3, Fig. 4, and Fig. 5 respectively show a schematic representation of tiles of the plurality of tiles that form a tiling and of files of the plurality of files 24. With reference to Fig. 2, Fig. 3, Fig. 4, and Fig. 5, operation of the processing system 20 will be explained in more detail. It should be understood that the tiling and/or the numbers of files are merely exemplary, with embodiments not being limited thereto. Generally, a hierarchical tile structure is set up and, if required, modified during operation of the processing system 20, in order to ensure that the files that store the electronic map data in the plurality of files 24 comply with a threshold criterion.

The processing system 20 is operative to determine the hierarchical tile structure such that there is a tiling 60 that contiguously covers an area 69. Each of a plurality of tiles 61, 62, 63, 64, 65, 66, 67, 68 is respectively associated with a region within the area 69, so that any point within the area 69 is included in a single one of the tiles of the tiling. Tile sizes (which may be determined by, for example, an edge length of the tiles, with the tiles optionally being square in shape) may vary throughout the tiling. For illustration, tiles 61, 62 have an edge length that is half the edge length of tile 68. Tiles 63, 64, 65, 66 each have an edge length that is half of the edge length of tiles 61, 62, 67, and a quarter of the edge length of tile 68.

The plurality of files 24 comprises a set 71 of first files, each being associated with a tile 61. The different first files in the set 71 correspond to different points in times, i.e., different versions as the electronic map data varies as a function of time, with a most recent first file 71' corresponding to the latest revision. The plurality of files 24 comprises another set 72 of files, each being associated with a tile 62. The different files in the set 72 correspond to different points in time, i.e., different versions as the electronic map data varies with time, with a most recent file 72' corresponding to the latest revision. Similarly, the plurality of files 24 may comprises a set 73 of files associated with another tile 63, a further set 74 of files associated with a further tile 64, yet another set 77 of files associated with yet another tile 67, and a still further set 78 of files associated with a still further tile 68. The most recent files in each of the sets are respectively indicated by an apostrophe, with the files 73', 74', 77', and 78' being the most recent files in the respective sets 73, 74, 77, 78.

The tiling 60 that defines the plurality of tiles 61, 62, 63, 64, 65, 66, 67, 68 is determined in such a manner that, for any tile having a tile size greater than the minimum tile size supported by the processing system 20, each of the plurality of files 24 associated with any such tile complies with a threshold criterion. Thus, as map objects are modified (e.g., added, changed, or deleted), it may be required to dynamically adjust the tiling 60. In other embodiments, the tiling 60 does not need to be adjusted during operation of the processing system 20, thereby accepting that some of the files may no longer be in conformity with the threshold criterion at some point during operation of the processing system 20. For tiles that correspond to the smallest tile size supported by the processing system 20, it is not required for the associated files to comply with the threshold criterion. By relaxing the threshold criterion at the smallest tile scale, a fixed length bit sequence as part of a new neck object identifiers may be used to uniquely determine the tile for which the associated file is to be accessed to retrieve object data, for example.

It is not required that any of the tiles of the tiling has the minimum tile size supported by the processing system 20. The minimum tile size is generally determined by a length of a bit sequence used to provide a unique identifier for a tile based at least on the hierarchical tile structure, up to the minimum tile size if used. However, a subset of bits of the bit sequence still provide a unique identification of a tile even when all tiles are greater than the minimum tile size supported by the processing system 20. Thus, when all tiles have a tile size greater than the minimum tile size supported by the processing system 20 (which is often a reality in supporting, for example, in excess of ten hierarchy levels of tiles), all files in the plurality of files 24 are in conformity with the threshold criterion. It should be noted that the minimum tile size supported by the processing system 20 and/or the minimum tile size that is possible in the hierarchical tile structure may be smaller than any of the tiles in the tiling.

As a result of the threshold criterion, tile sizes are variable as a function of geolocation within the area 69. For illustration, a higher number of map objects and/or a higher storage space demand normalized by area may be greater in the areas occupied by tiles 63, 64, 65, 66 as compared to areas occupied by tiles 61, 62, 67, 68 where the tiles can be larger without any of the files in the associated set 71, 72, 77, 78 violating the threshold criterion.

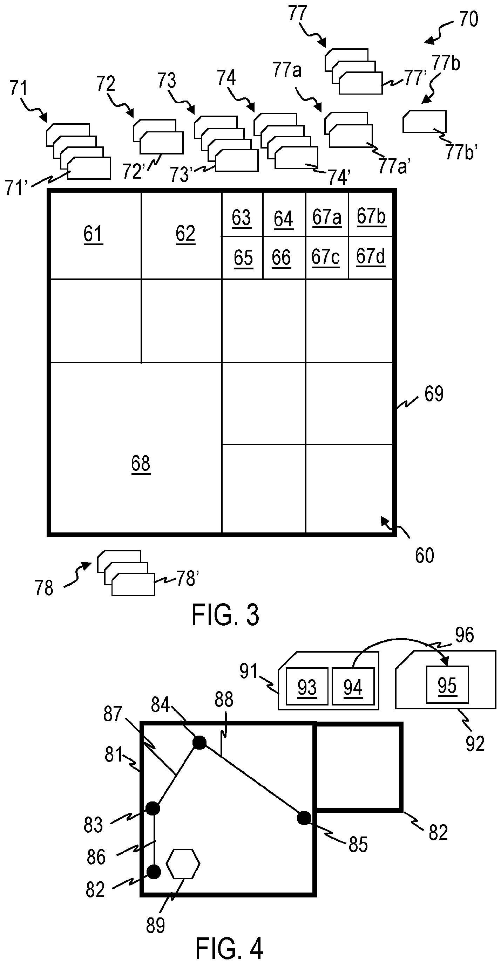

A change in the number of map objects and/or in the storage space requirements may necessitate tile splitting during operation of the processing system. This is illustrated with reference to Fig. 2 and Fig. 3.

Considering a scenario in which an addition of map objects to the area covered by the tile 67 would result in an update of the associated file 77' that violates the threshold criterion, the tile 67 is split by the processing system into an integer number of smaller tiles 67a, 67b, 67c, 67d having a same size and offset from each other so as to contiguously cover the area previously covered by the tile 67 (Fig. 3). In accordance with a tile splitting, sets of files 77a, 77b are created, each associated with an associated one of the smaller tiles 67a, 67b, 67c, 67d. The set of files 77 associated with the larger tile 67 is maintained in the set of files 24, in order to provide access to historical electronic map data and/or to allow the processing system 20 to revert to a previous version of the plurality of files in case a referential and/or semantic integrity issue is detected.

As illustrated in Fig. 2 and Fig. 3, sets of files associated with different ones of the plurality of tiles in the tiling 60 may differ in number. For illustration, a number of different files included in the plurality of files for one tile (such as tile 61) may be different from a number of different files included in the plurality of files for another tile (such as tile 62, 63, 64, 68). Version numbers of the most recent files may, accordingly, the different from one tile to another. For illustration, a most recent file 71' of a set of files 71 associated with a tile (such as tile 61) may have a version number different from a most recent file 72' of another set of files 72 associated with another tile (such as tile 62).

The files included in the plurality of files are associated with tiles and, therefore, are linked to different regions. However, while a file associated with a tile may and typically will store object data for objects having geo-coordinates located in the area of the associated tile, the object data may also be stored in a different tile. This may be the case if, for example, an object was previously located within a tile and that changes in coordinates of the object have caused the object or shifted across tile boundaries. In such a case, the object data may remain in a file that is associated with the tile in which the object was originally located, with another file associated with another tile in which the object is located after the coordinates shift including a reference to the file associated with a tile in which the object was originally located. Thus, the plurality of files 24 may comprise one or several files that include a reference to another file associated with another tile.

Fig. 4 illustrates that a first file 91 is associated with a first tile 81. The first file 91 stores object data 93 for objects arranged within the first tile 81, i.e., having geo-coordinates located in the first tile 81. For illustration, nodes 82, 83, 84 and ways 86, 87, 88, and other objects, such as a traffic sign or POI 89, may respectively have geo-coordinates located within the first tile, with the respective object data 93 being stored in the first file 91. However, for another object 85, that has geo-coordinates located within the first tile 81, the first file 91 includes a reference 94 to object data 95 included in a second file 92 associated with a second tile 82. The second tile 82 may, but does not need to be, adjacent to the first tile 81. Such a situation may occur, for example, if the node 85 was originally located within the second tile 82 and a coordinates shift has caused the node 85 to be moved across the tile boundary to within the first tile 81.

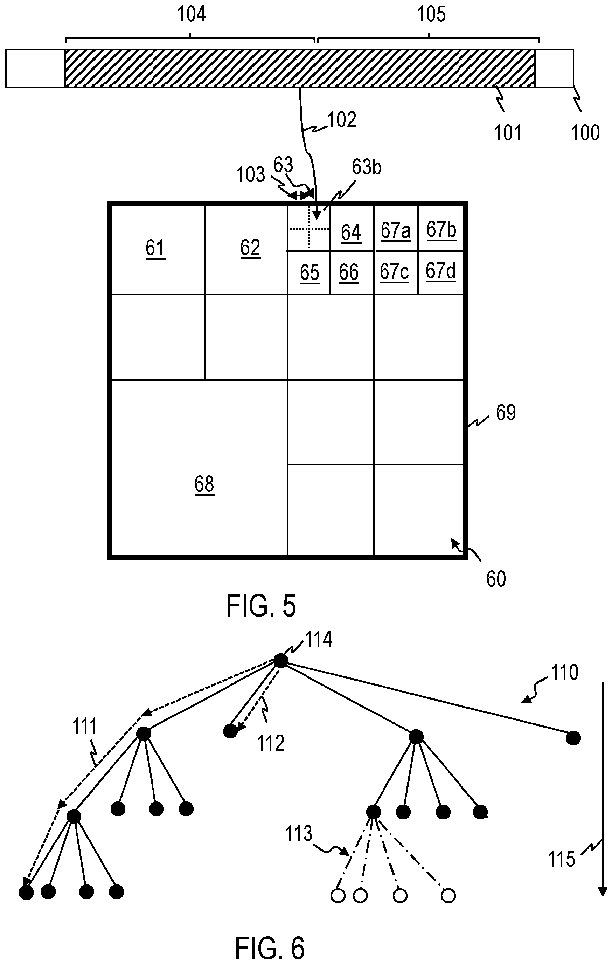

Thus, in order to provide efficient access to versioned electronic map data using a bit sequence that specifies the path through a quadtree (as will be described in more detail with reference to Fig. 5 and Fig. 6), the file associated with a tile in which the current geocoordinates of an object are located does not need to store the object definition of that object. This file may comprise a reference to another file, useful in retrieval of the object data. Similarly, a file (such as file 92) may store object data comprising an object definition that includes geocoordinates outside of the tile (such as tile 82) with which the file 92 is associated.

Such a configuration of the plurality of tiles and/or the plurality of files provides various advantages. For illustration, an efficient access is provided for various types of requests, such as queries by object identifier, queries by area that may specify a closed boundary of the area, and/or membership queries that return data on all objects that are member of a map object specified in the respective query.

Each object in the electronic map data has a unique object identifier. The unique object identifier comprises a bit sequence that determines a path through a hierarchical tile structure that is to be followed to identify the tile for which the associated file is to be accessed in response to a message specifying the unique object identifier. This will be further explained next.

Fig. 5 shows a schematic representation of a unique object identifier 100 for an electronic map object. In the unique object identifier 100 comprises a bit sequence 101 that is configured to be used by the processing system to identify the path through the hierarchical tile structure that is to be followed to identify the tile for which the associated file stores the object data. The bit sequence 101 configured to be used by the processing system to identify the path through the hierarchical tile structure that may be represented by or stored in the tile directory. The bit sequence 101 may have a length that depends on the maximum tile size in the minimum tile size supported by the processing system 20. As previously explained, it is not required that the tiling has any tile that is actually a small as the minimum tile size supported by the processing system 20. This notwithstanding, the bit sequence 101 has a length that is sufficient to fully identify the tile in which object data or a reference for that object are stored, even if the plurality of tiles comprises tiles as small as the minimum tile size supported by the processing system 20. For tiles that are greater in size than the minimum tile size supported by the processing system 20, the bit sequence 101 comprises a first set of bits 104 that specify the path through a quadtree (or other hierarchical tile structure) up to the actual tile size, while a second set of bits 105 specify a continuation of the access path through the hierarchical tile structure (e.g., the quadtree) that will become relevant if, and only if, the tile size is to be reduced (e.g., in tile splitting operations caused by an increase in the number or storage space of objects) down to the minimum tile size supported by the processing system.

Referring to the tiling 60, the unique object identifier 100 comprises the bit sequence 101, which in turn comprises the first set of bits 104. The first set of bits 104 uniquely identifies the tile 63 that has the smallest tile size presently used in the tiling 60, but which still has an edge length greater than a smallest edge length 103 of a minimum tile size supported by the processing system. Thus, the first set of bits 104 is sufficient to determine, for the tiling 60, the tile with which the file to be accessed is associated. The second set of bits 105 provides additional information that is required for a tiling having more granular (i.e., smaller) tiles such as a tile 63b. The second set of bits 105 does not need to be used to determine the tile with which the file to be accessed is associated for the tiling 60. However, as the tiling 60 can be modified, the seconds et obits 105 have the potential of, and are operative for, uniquely determining the tile with which the file to be accessed is associated, even if that tile has the minimum tile size supported by the processing system 20.

Thus, the methods and processing systems disclosed herein are operative such that the bit sequence 101 comprised by the unique object identifier is useful for accessing the plurality of files 24 for efficient electronic map data access, while accommodating changes in the plurality of tiles (e.g., by tile splitting and/or tile merger) that may occur during operation of the processing system 20, accommodating a variety of access operations, and accommodating

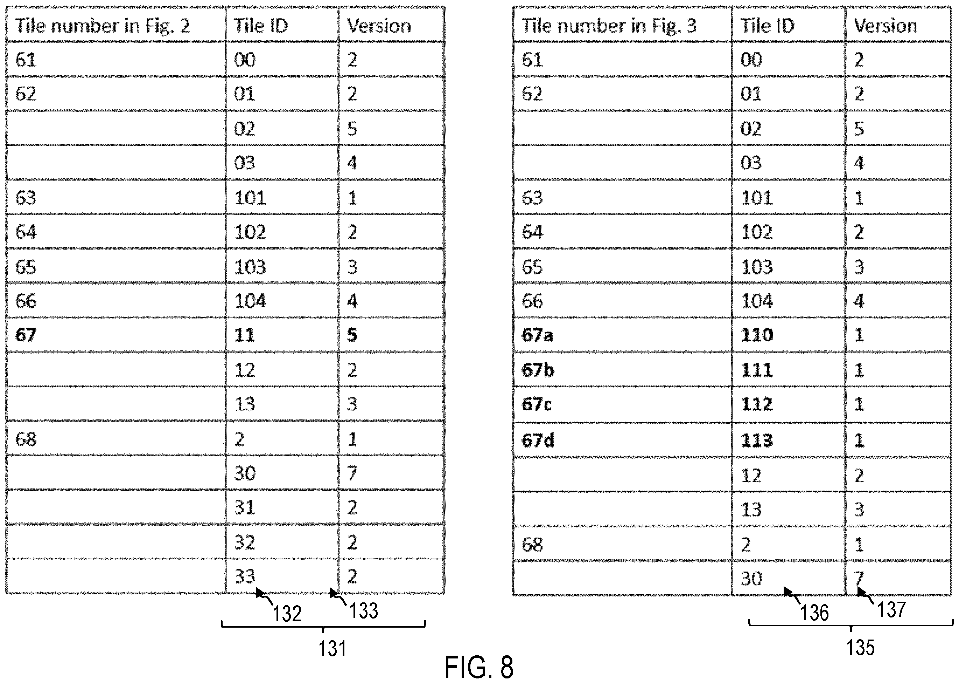

Fig. 6 is a schematic representation of a hierarchical tile structure 110 configured as a quadtree 110. The hierarchical tile structure 110 may be defined by the tile directory 26 (as further illustrated with reference to Fig. 8 below). Any node of the hierarchical tile structure 110 comprises either zero or four child nodes. A root node 114 represents the total area covered by the tiling comprising the plurality of tiles. If present, the four child nodes of any node represent four quadrants located and arranged within the tile that is associated with the respective node. The bit sequence 101 specifies, for any node that has child nodes, which path through the hierarchical tile structure (e.g. the quadtree) needs to be followed by the at least one processing circuit 30 to identify the tile with which the file to be accessed is associated. For illustration, for one map object, the bit sequence 101 defines a path 111 through the hierarchical tile structure 110, which path 111 terminates at a leaf node that represents a tile of the plurality of tiles. The processing system 20 is operative to access a file associated with this tile to access object data for the object having the respective bit sequence 101. For a different map object, a different bit sequence 101 defines a different path 112 through the hierarchical tile structure 110, which different path 112 terminates at a different leaf node that the represents a different tile of the plurality of tiles. The processing system 20 is operative to access a different file associated with this different tile to access object data for the different object having the respective different bit sequence 101. Tile splitting and/or tile merger causes a change in the hierarchical tile structure 110. For illustration, as schematically illustrated by the additional child nodes 113, tile splitting of a tile associated with a previous leaf node of the hierarchical tile structure 110 results in the generation of four new leaf nodes, each being a child node of the previous leaf node. Thus, a depth 115 of the hierarchical tile structure (which determines the number of nodes that are to be traversed up to a leaf node) may vary from one region to another and/or as a function of time.

Generally, the bit sequence 101 in the unique object identifier 100 is configured to be used by the processing system to determine the path through the quadtree or another hierarchical tile structure that is to be followed to efficiently identify, in the tile directory, the tile with which the file to be accessed is associated. The tile directory 26 in combination with the bit sequence 101 determines at which level in the hierarchical tile structure 110 there exists a tile with which a file (the first file) is to be accessed to perform the access operation. The processing system and method are operative such that, even after the tiling was changed dynamically (e.g., by performing a tile merger and/or tile splitting operation), the (then updated) tile directory in combination with the same bit sequence 101 determines at which level in the hierarchical tile structure 110 there exists an updated tile with which an updated file (the first file) is to be accessed to perform the access operation.

Generally, there may (and often will) be different file versions for the tile. The tile directory 26 provides information on such different versions and is accessed by the at least one processing circuit 30 to determine which one of several files for the tile identified based at least on the hierarchical tile structure 110 is to be accessed.

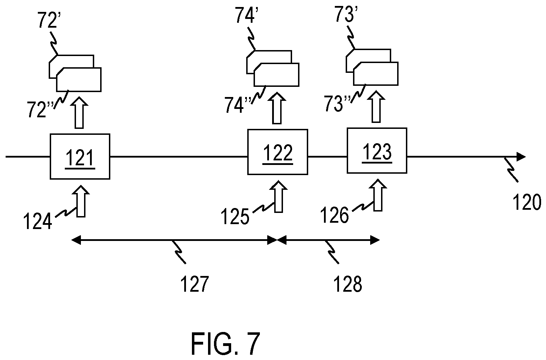

Fig. 7 illustrates operation of the processing system 20 in response to messages 124, 125, 126 that respectively comprise requests to modify the electronic map data. The modification may respectively comprise any one or any combination of changing an existing map object, adding a new map object, and/or deleting a previously existing map object.

The processing system 20 is operative to perform an update process 121 responsive to a message 124, causing the generation of an updated file 72" from a file 72' of the plurality of files, which updated file 72" is generated by modifying the file 72' based at least on the message 124. The update process 121 may optionally comprise a modification of the plurality of tiles (such as by tile merger and/or tile splitting) and/or a generation of an updated tile directory from the tile directory 26.

The processing system 20 is operative to perform a further update process 122 responsive to a message 125, causing the generation of an updated further file 74" from a further file 74' of the plurality of files, which updated further file 74" is generated by modifying the further file 74' based at least on the message 125. The further update process 122 may optionally comprise a further modification of the plurality of tiles (such as by tile merger and/or tile splitting) and/or a generation of a further updated tile directory from the tile directory 26.

The processing system 20 is operative to perform a still further update process 123 responsive to a message 126, causing the generation of an updated still further file 73" from a still further file 73' of the plurality of files, which updated still further file 73" is generated by modifying the still further file 73' based at least on the message 126. The still further update process 123 may optionally comprise a still further modification of the plurality of tiles (such as by tile merger and/or tile splitting) and/or a generation of a still further updated tile directory from the tile directory 26.

The processing system 20 is operative to process the messages 124, 125, 126 to modify electronic map data, even when the messages 124, 125, 126 received at an irregular timing. For illustration, a time interval 127 between initiation of the update process 121 and initiation of the further update process 122, which is immediately successive to the update process 121, may be different from a further time interval 128 measured between initiation of the further update process 122 and the still further update process 123, which is immediately successive to the further update process 122..

Fig. 8 shows a schematic representation of data included in an exemplary tile directory, with tile directory data 131 representing (part of) a tile directory for the tiling of Fig. 2 and further tile directory data 135 representing (part of) a further tile directory for the tiling of Fig. 3.

The left-most columns in the tables of Fig. 8 respectively represent the reference numerals used to designate tiles in Fig. 2 and Fig. 3, respectively. These left-most columns are provided for ease of reference and understanding in Fig. 8. These left-most columns do not form part of the tile directory and are not included in the tile directory, but merely serve to aid understanding of the disclosure.

The tile directory data 131 and the further tile directory data 135 respectively comprises unique tile identifiers 132, 136, each being unique for one of the tiles in the respective tiling. Each unique tile identifiers 132, 136 may have a number of (significant) digits that depends on and/or reflects a size (e.g., an edge length) of the tile to which the unique tile identifier applies. A dynamic change in the tiling by tile merger and/or tile splitting causes the number of (significant) digits of the unique tile identifier to change. For illustration, tile splitting causes the number of (significant) digits of the unique tile identifier to increase, as shown for tiles 67a, 67b, 67c, 67d in the further tile directory 135. The (significant) digits of the unique tile identifiers in the respective tile directory are configured to be used by the processing system, in combination with the bit sequence 101 of the object identifier, to determine a file (e.g., the first file) to be access in an access operation.

The tile directory data 131 and the further tile directory data 135 respectively comprise version data 133, 137. The version data specifies, for each of the tiles, a version of the respective tile and/or file associated with the tile. The versions may be different for different tiles of a same tiling.

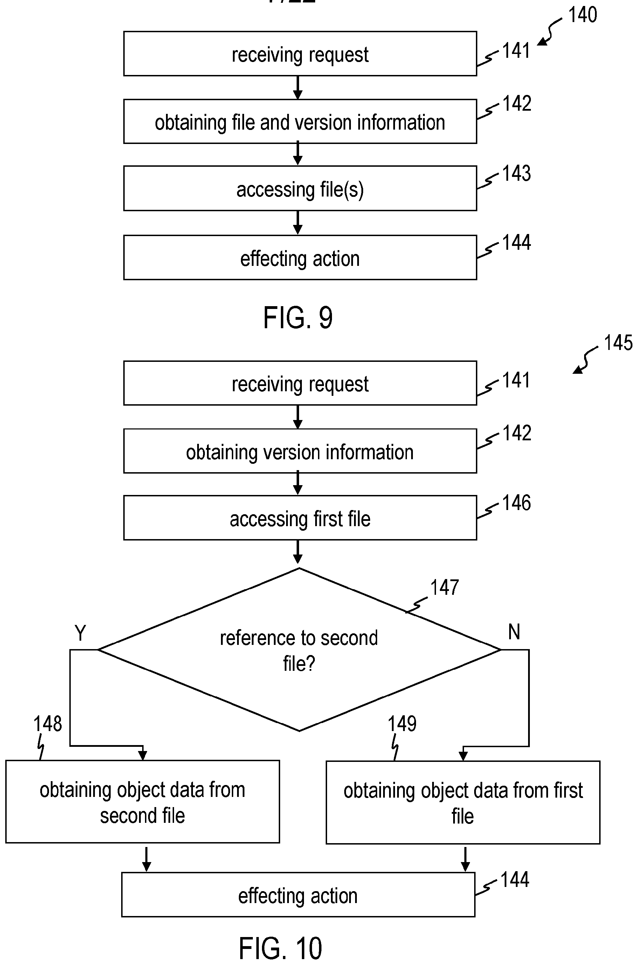

Fig. 9 is a flow chart of a method 140 of performing a map data-related function and/or of enabling access to electronic map data. The method 140 may be performed automatically by the processing system 20.

At 141, the processing system 20 receives a request. The request may comprise a request for obtaining electronic map data and/or a request for modifying the electronic map data. The request may have any of various supported request types, such as a request for object data of an object specified by a unique object identifier, a request for all objects located within an area surrounded by a closed boundary defined within the request, and/or a request for information on all objects of which an object specified in the request is a member.

At 142, the processing system obtains file information and version information for a file to be accessed. Obtaining the tile information may comprise utilizing the tile directory 26 to identify the tile in the quad tree and the associated file. Obtaining the version information may comprise utilizing the tile directory 26 to obtain the version information. To obtain the version information for the correct file, the processing system 20 may identify tiles with which the file or the files to be accessed are associated. This may comprise utilizing the bit sequence 101 and the unique object identifier 100 in conjunction with the tile directory to determine the tile, and then use the tile directory 26 to obtain the version information. Alternatively or additionally, the processing system 20 may identify, based at least on a closed boundary of an area specified in the request (optionally also in association with the tile directory 26 and the hierarchical tile structure defined thereby), tiles that overlap with that area. The processing system 20 may then use the tile directory 26 to obtain the version information.

At 143, at least one file of the plurality of files 24 is accessed. The access operation at 143 may be based at least on version information included in the tile directory 26 and one or several tiles identified based at least on the request and the hierarchical tile structure in which the tiling is organized.

At 144, the processing system 20 performs an action or enables performance of an action. The action may comprise modifying, based at least on the received request, the electronic map data, comprising generation of at least one new file and storing the at least one new file in addition to the previously existing files. Alternatively or additionally, the action may comprise generating output and controlling at least one data interface to communicate the output as a response to the request.

Fig. 10 is a flow chart of a method 145 of performing a map data-related function and/or of enabling access to electronic map data. The method 145 may be performed automatically by the processing system 20.

Process blocks 141 and 142 of the method 145 may be implemented as previously described in association with the method 140 of Fig. 9.

At process block 146, the processing system 20 accesses a first file of the plurality of files 24. Accessing the first file may comprise determining, based at least on the hierarchical tile structure, a first tile with which the first file to be accessed is associated. Accessing the first file may further comprise determining, based at least on the tile directory, version information and using the version information to identify the first file to be accessed.

At process block 147, the processing system 20 determines whether the first file comprises a reference to a second file that is associated with a second tile different from the first tile.

At process block 148, responsive to determining that the first file comprises the reference to the second file, the processing system 20 retrieves object data from the second file.

At process block 149, responsive to determining that the first file does not comprise a reference to the second file in association with the respective object, the processing system 20 retrieves the object data from the first file.

At process block 144, an action is effected or enabled based at least on the retrieved object data. The object data may comprise at least coordinates or other information related to at least one electronic map object. Process block 144 may be performed as previously described in association with the method 140 of Fig. 9.

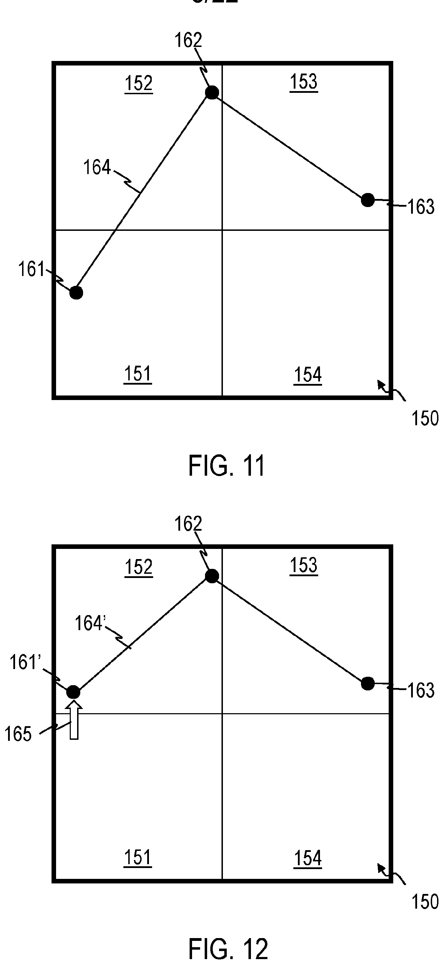

Fig. 11, Fig. 12, and Fig. 13 show an illustrative tiling 150 comprising a plurality of tiles 151, 152, 153, 154, with reference to which operation of the processing system 20 will be explained in additional detail. The electronic map data comprises object data including object definitions for several map objects, such as a first node 161, another node 162, a further node 163, and/or map objects that comprise nodes, such as a way 164 defined in terms of its constituent nodes 161, 162. An object definition of the first node 161 comprising its geo-coordinates may be stored in a first file associated with the first tile 151. An object definition of the second node 162 comprising its geo-coordinates may be stored in a second file associated with the second tile 152. A geometry of the way 164 may be stored in one of the files associated with the tiles 151, 152, such as the first file associated with the first tile 151. A coordinates shift 165 (Fig. 12) may cause the geo-coordinates of the first node 161 to shift to a new location, with the shifted first node 161 being located in the second tile 152 different from the first tile 151. In view of the bit sequence 101 included in the unique object identifier 100, the updated geo-coordinates of the first node 161' are stored in an updated first file that is associated with the first tile 151. An updated second file associated with the second tile 152 is generated such that it comprises a reference to the first tile 151. Similarly, the resultant change in geometry of the way that has a modified geometry 164' may be stored in the updated first file associated with a first tile, with a reference being included in the updated second file associated with the second tile 152. The tile directory 26 may be updated accordingly.

When the way 164, 164' includes all three nodes 161, 162, 163, a reference to the first tile 151 may also be included in a third file associated with the third tile 153. This facilitates efficient handling of requests by area, such as requests that specify a closed boundary surrounding an area of interest.

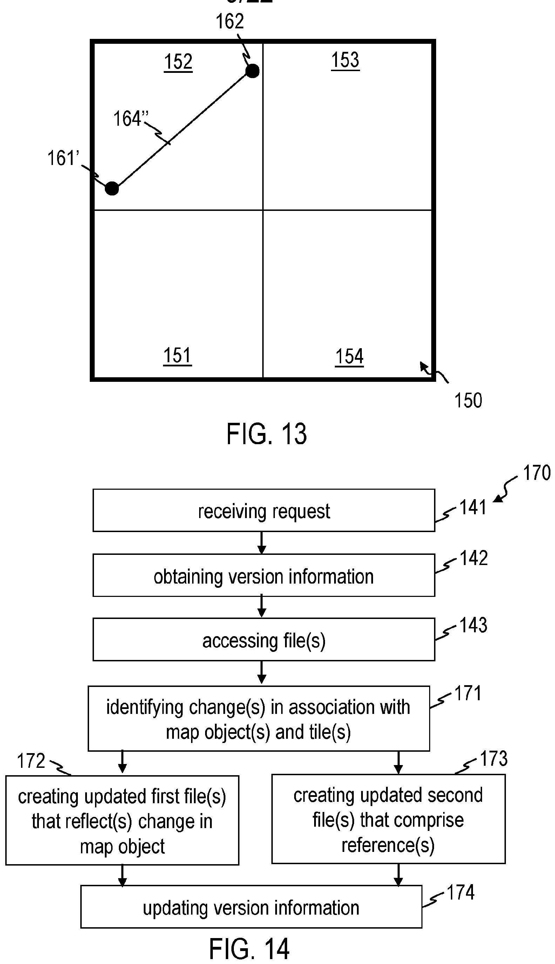

When node 163 is deleted (Fig. 13), this causes an update of the geometry of the way 164, 164' to a modified way geometry 164" that is stored in a further updated file associated with the first tile 151. To account for this modification, the way geometry may be updated in the first file associated with the first tile 151. The node 163 and the associated object data may be deleted from the third file associated with the third tile 153. The way definition in the further updated first file is changed by removing the node 163 from the way that now has way geometry 164". The tile directory 26 may be updated accordingly.

Fig. 14 is a flow chart of a method 170 of performing a map data-related function and/or of enabling access to electronic map data. The method 170 may be performed automatically by the processing system 20.

Process blocks 141, 142, and 143 of the method 170 may be implemented as previously described in association with the method 140 of Fig. 9. The request received at 141 may comprise a request for modification of electronic map data.

At process block 171, the processing system 20 determines the change is to be made to the electronic map data. The changes are determined based at least on the received request and in association with the plurality of files in the hierarchical tile structure. Determining the changes to be made may comprise determining whether geo-coordinates of a map object shift across a tile boundary. Alternatively or additionally, determining the changes to be made may comprise determining whether a tile merger or tile splitting is to be performed.

At process block 172, the processing system 20 generates a new first file or several new first files from an existing first file, to reflect the change to the electronic map data as specified by the request received at 141. Generating the new first file may comprise generating the new first file such that it comprises updated geo-coordinates of a map object. Generating the new first file may alternatively or additionally comprise generating the new first file such that it comprises at least one map object (such as a node, way, or relation) added to the electronic map data based at least on the request received at 141. Generating the new first file may alternatively or additionally comprise generating the new first file such that it comprises updated nodes of, for example, map objects that are based or relations.

At process block 173, the processing system 20 may optionally generate one or several updated second files. The one or several updated second files may comprise references to the first files, in particular when the change causes object coordinates to shifted across a tile boundary.

At process block 174, version information is updated. This may comprise updating the tile directory and/or generating a record indicative of the new versions that were generated at process blocks 172, 173.

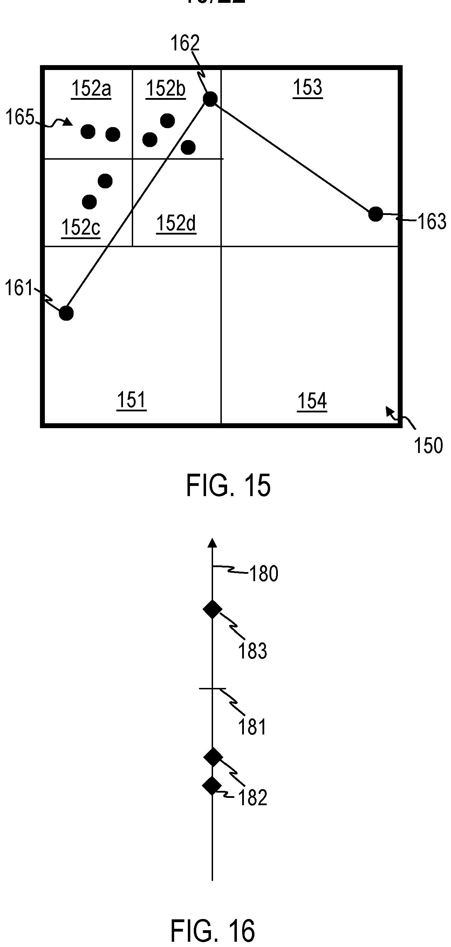

The modification of the electronic map data may further comprise the modification of the tiling, comprising a tile merger and/or tile splitting. This is explained in more detail with reference to Fig. 15 and Fig. 16.

Fig. 15 shows the exemplary tiling 150. As compared to the electronic map data illustrated in Fig. 11, addition of map objects 165 triggers a tile splitting, in which the tile 152 is split into a plurality of smaller tiles, such as for smaller tiles. The tile splitting is initiated selectively responsive to determining, by the processing system, that addition of the map objects 165 would cause the second file associated with the (larger) second tile 152 to be no longer in conformity with a threshold criterion. The threshold criterion may comprise an object number-based threshold criterion and/or a file size threshold criterion. Thus, the processing system may dynamically accept the tiling 150 and, accordingly, the hierarchical tile structure that represents the tiling 150, so as to ensure that at least all files that are associated with tiles greater than the minimum tile size supported by the processing system 20 comply with the threshold criterion.

Fig. 16 illustrates the threshold comparison, based at least on which a tile splitting or tile merger is initiated during operation of the processing system 20. A quantity used in the threshold comparison is shown along an axis 180. The axis 180 may represent a number of map objects in a tile and/or a file size. Responsive to determining that a modification of the electronic map data would result in a tile or file that does not comply with the threshold criterion (as schematically illustrated by symbol 183) triggers a modification of the tiling and the hierarchical tile structure that represents the tiling, such that the corresponding tiles after the modification comply with the threshold criterion (as schematically illustrated by symbols 182). For illustration, if addition of map objects to a region covered by a tile would cause the number of map objects to reach a number value 183 greater than the threshold 181, tile splitting is performed such that any of the smaller tiles into which the original tile is split has a number 182 of map objects that may be different from one smaller tile to another one, but that is smaller than the threshold 181 for each of the smaller tiles. Alternatively or additionally, if addition of or modification of map objects in a region covered by a tile would cause a file associated with the tile to have a file size 183 greater than a file size threshold 181, tile splitting is performed such that the files associated with any of the smaller tiles into which the original tile is split has a file size 182 that may be different from one smaller tile to another one, but that is smaller than the threshold 181 for each of the smaller tiles.

While a tile splitting has been explained, a tile merging may be performed responsive to detecting that a combination of several smaller tiles into a larger tile would still be in conformity with the threshold criterion. This may happen, for example, when map objects are deleted.

The at least one bit sequence 101 of the object identifiers obviates the need for changing the object identifiers responsive to a dynamic change in the tiling. Thus, the at least one bit sequence 101 of the object identifiers 100 continues to fulfil its function even after the processing system performs a tile merger and/or tile splitting to modify the tiling. This is attained by the hierarchical structure of the tiling. The configuration of the tile identifiers (Fig. 8) contributes to the bit sequence 101 of the object identifiers 100 being able to fulfil its function even after the processing system performs a tile merger and/or tile splitting to modify the tiling.

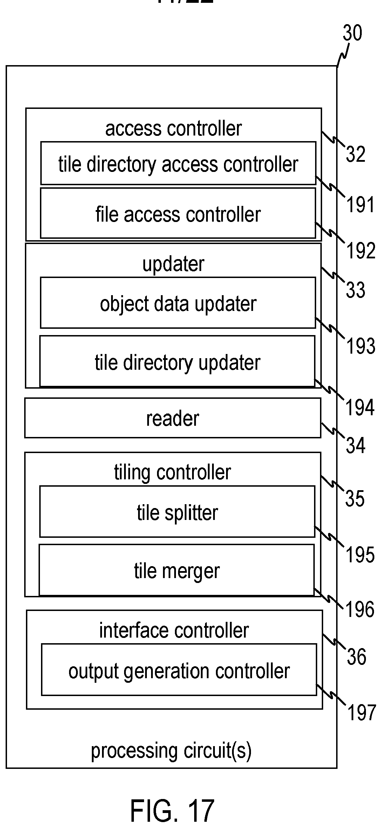

Fig. 17 is a schematic block diagram representation of the at least one processing circuit 30 of the processing system 20. The access controller 32 may comprise both a tile directory access controller 191 operative to access the tile directory 26 to obtain version information and a file access controller 192 operative to access a desired one of the plurality of files 24. The access controller 192 may be operative to determine the file(s) to be accessed based at least on both version information in the tile directory 26 and the hierarchical tile structure that determines with which tile(s) the file(s) to be accessed are associated.

The updater 33 may comprise an object data updater 193 operative to update object data by causing generation of new file(s), optionally also by generating file(s) that include references to other file(s). The updater 33 may comprise a tile directory updater 194. The tile directory updater 194 does not need to update the tile directory after each map data revision but may keep a record of updates, with the tile directory updater 194 triggering the update of the tile directory responsive to a trigger criterion that may be configurable (such as expiry of a timer that may be configurable, and/or a criterion that is based at least on a revision count threshold to which the number of revisions is compared).

The tiling controller 35 may comprise a tile splitter 195 operative to perform a tile splitting. The tile splitter 195 may be operative to initiate the tile splitting responsive to determining that a modification of the electronic map data requires at least one tile to be split into an integer number of smaller tiles, in order to ensure that the files associated therewith comply with a threshold criterion. The tiling controller 35 may alternatively or additionally comprise a tile merger 196 operative to perform a tile merging. The tile merger 196 may be operative to initiate the tile merger responsive to determining that a modification of the electronic map data makes it possible to merge several tiles into a larger tile associated with a parent node of the several tiles in the hierarchical tile structure, with the larger tile being such that the threshold criterion is complied with. Thereby, the number of tiles may be kept at a minimum while ensuring conformity with the threshold criterion for all tiles but those at the smallest tile size supported by the processing system 20.

The interface controller 36 may comprise an output generation controller 197 operative to control at least one data interface to provide output. The output generation controller 197 may be operative to cause the output to be provided responsive to a request for modification of electronic map data, with the output confirming that the modification was implemented. Alternatively or additionally, the output generation controller 197 may be operative to cause the output to be provided responsive to a request for electronic map data, with the output comprising the requested electronic map data.

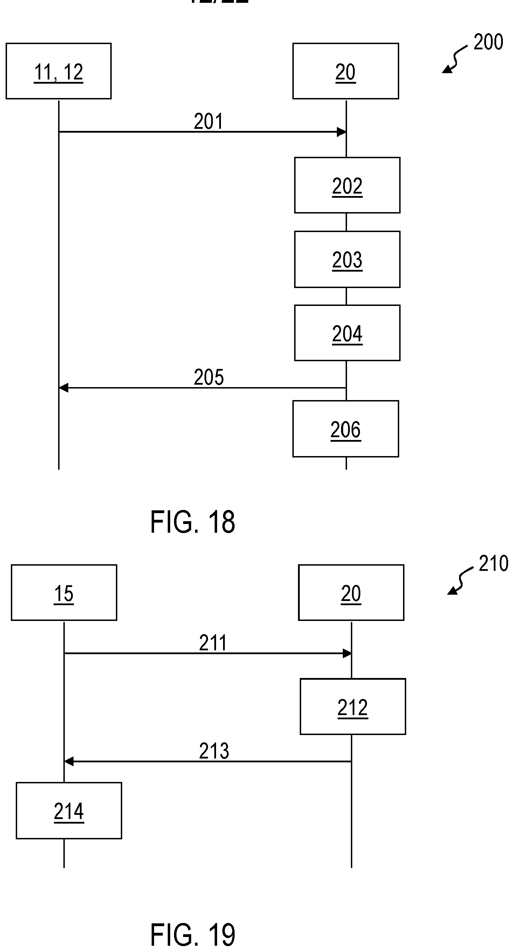

Fig. 18 shows a signaling flow in a system 200 that comprises the processing system 20 and one or several map data provision systems 11, 12. Each of the one or several map data provision systems 11, 12 respectively may be set to be associated with different map layer. The processing system 20 is operative to receive a request 201 for modification of electronic map data that originates from at least one of the map data provision systems 11, 12. Responsive to the request 201, the processing system 20 is operative to perform an identification 202 of a tile with which a file of the plurality of files 24 is associated and which is to be accessed responsive to the request 201. The identification 202 of the tile may be performed based at least on the hierarchical tile structure that represents the tiling, as reflected in the tile directory. The processing system 20 may further be operative to determine, based at least on the tile directory 26, which file version for the determined tile is to be accessed. The processing system 20 may be operative to perform a verification 203 to determine whether the request for modification requires a tile splitting or tile merging operation. The verification 203 may comprise determining whether the requested modification would result in a violation of the threshold criterion and initiating the modification of the tiling responsive to such a determination. The processing system 20 may be operative to perform a file generation 204 to generate one or several additional files that are stored in addition to the previously existing files, each of the newly generated files being associated with only one of the tiles of the tiling. The processing system 20 may further be operative to update the tile directory and/or record the update in conjunction with the tile directory. The processing system 20 is operative to generate and provide an output 205 to confirm that the request for modification was implemented. The processing system 20 is operative to enable access 206 to the electronic map data that is modified responsive to the request. The processing system 20 may be operative to enable performance of a map data -related function, such as a driver assistance function, an advanced driver assistance function, an autonomous driving function, or another vehicle control operation, without being limited thereto.

Fig. 19 shows a signaling flow in a system 210 that comprises the processing system 20 and one or several map data consumers 15. The processing system 20 is operative to receive a request 211 originating from a map data consumer 15. The request may be selected from any of a variety of request types, such as a request for object data of a particular object (which may be specified by its unique object identifier 100); a request for object data of objects located within an area specified by a closed boundary included in the request; a request for information on all objects that are a member of an object (which may be specified by its unique object identifier 100). The processing system 20 is operative to perform an access operation 212, comprising an identification of the tile with which the file or the files to be accessed are associated. Moreover, the processing system 20 may determine a version of the file to be accessed based at least on the tile directory 26. The processing system 20 is operative to provide output 213 that is based at least on the retrieved electronic map data, in dependence on the request 211. The at least one map data consumer 15 may be operative to perform, based at least on the output 213, a map data -related function. The map data -related function may comprise, for example, a driver assistance function, an advanced driver assistance function, an autonomous driving function, or another vehicle control operation, without being limited thereto.

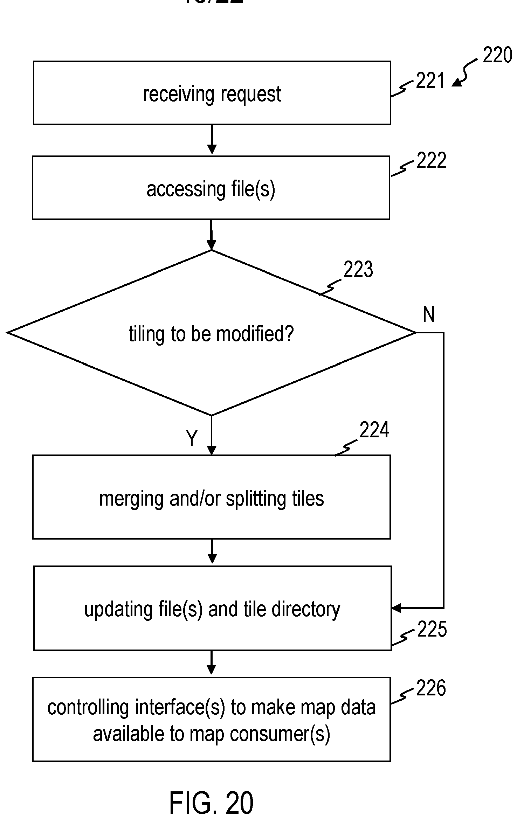

Fig. 20 is a flow chart of a method 220 of performing a map data-related function and/or of enabling access to electronic map data. The method 220 may be performed automatically by the processing system 20.

At process block 221, the processing system 20 receives a request for modification of the electronic map data.

At process block 222, the processing system 20 determines which file or which files of the plurality of files 24 are to be accessed. This may comprise determining, based at least on the request, a tile with which the file to be accessed is associated. This may further comprise determining, based at least on the tile and the tile directory 26, a version of the file to be accessed.

At process block 223, the processing system 20 determines whether the tiling is to be modified. Determining whether the tiling is to be modified may comprise determining, by the processing system 20, whether a new file generated to reflect the modification in electronic map data specified by the request received at process block 221 but still be in conformity with a threshold criterion. The threshold criterion may be based at least on a number of map objects for tile or profile and/or based at least on a file size. Determining whether the tiling is to be modified may further comprise determining, by the processing system 20, whether the modification of the electronic map data specified by the request received at process block 221 allows several tiles to be merged into their parent tile (in accordance with the hierarchical tile structure, such as the court tree structure), while ensuring that the associated file is in conformity with the threshold criterion.

At process block 224, responsive to determining that the tiling is to be modified, a tile merging and/or tile splitting is performed. The tile merging and/or tile splitting is performed in accordance with the hierarchical tile structure, e.g. by splitting a tile into smaller tiles that correspond to the four quadrants of the original tile, in accordance with the quadtree structure, and/or by merging for smaller tiles into their parent tile of the quadtree structure. Process block 224 is performed selectively only if it is determined that the tiling is to be modified.

At process block 225, the processing system 20 generates updated files, without deleting the previously existing files. Optionally, the processing system 20 may also generate an updated tile directory. As an alternative to generating an updated tile directory, a processing system 20 may maintain a record of the new versions generated for subsequent use in updating the tile directory.

At process block 226, the processing system controls at least one data interface to make the map data is modified available for use by one or several map data consumers.

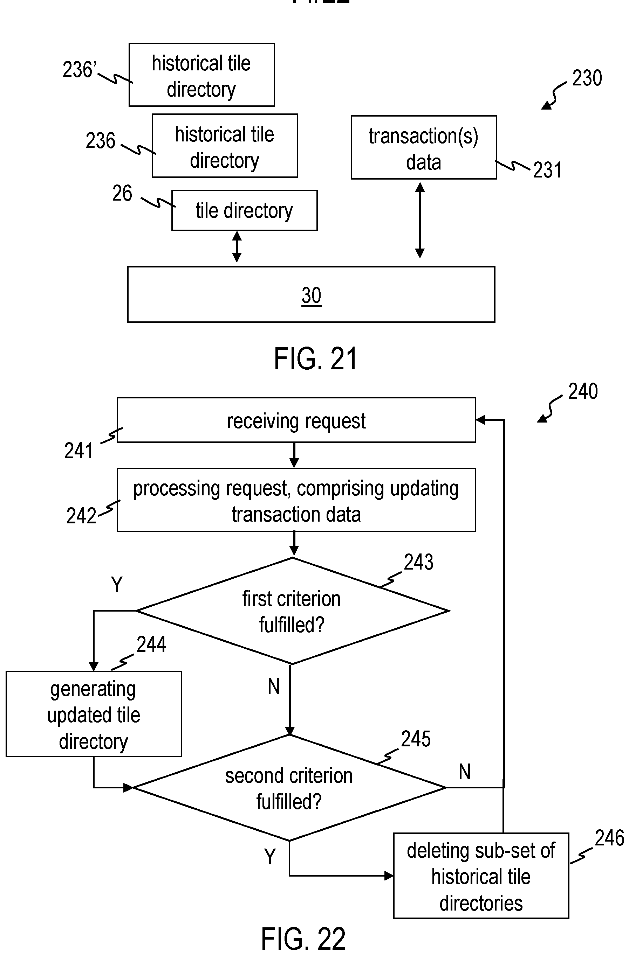

Fig. 21 is a schematic block diagram representation 230 to further explain operation of the processing system 20 with regard to the tile directory and updates thereof. The processing system 20 may store, in addition to the tile directory 26, one or several historical tile directories 236, 236'. The one or more historical tile directories correspond to revisions of the electronic map data that predated the most recent revision. Maintaining the one or several historical tile directories facilitates access to previous versions of the electronic map data. Maintaining the one or several historical tile directories also makes it easier for the processing system 20 to revert to a previous version of the electronic map data responsive to detecting a semantic and/or referential integrity issue.

The processing system 20 may further maintain transaction data 231 indicative of revisions of the electronic map data, in particular generation of new files for inclusion in the plurality of files 24, that were made after generation of the most recent tile directory 26. Updates of the tile directory 26 may be generated in accordance with a configurable criterion, e.g., after the lapse of a time period which may be configurable and/or after a number of revisions that may be configurable. The update of the tile directory 26 may then be performed based at least on the transaction data 231. The transaction data 231 is also useful to determine which file version is to be accessed.

Fig. 22 is a flow chart of a method 240 of performing a map data-related function and/or of enabling access to electronic map data. The method 240 may be performed automatically by the processing system 20. The method 240 may be used in combination with any of the other methods disclosed herein, with the method 240 focusing on the tile directory-related aspects of the process.

At process block 241, the processing system 20 receives a request for modification of the electronic map data.

At process block 242, the processing system 20 processes the request received at process block 241 and updates the plurality of files. In addition, the processing system 20 updates the transaction data 231. Process block 240 may comprise, for example, the method 220 explained in detail with reference to Fig. 20.

At process block 243, the processing system 20 determines whether a first criterion is fulfilled. The first criterion may be a first configurable criterion. The first criterion may be a configurable time-based or revision count-based first criterion.

At process block 244, responsive to determining that the first criterion is fulfilled, the processing system 20 generates an updated tile directory. Generating the updated tile directory may comprise generating the updated tile directory and maintaining the updated tile directory in memory in addition to the historical tile directories. The updated tile directory may be generated based at least on a most recent tile directory that precedes the generation process block 244, in combination with the transaction data 231 as available at the time of generating the updated tile directory. The method can then proceed at process block 245.

At process block 245, the processing system 20 determines whether a second criterion is fulfilled. The second criterion may be a second configurable criterion. The second criterion may be a configurable time-based or revision count-based second criterion.

At process block 246, responsive to determining that the second criterion is fulfilled, the processing system 20 deletes at least one, optionally several, historical tile directories. The processing system 20 may delete the oldest ones among the several tile directories and/or subsets that ensure that a historical record remains available. Thereby, historical tile directories remain available for a longer time span in the past, although with reduced temporal resolution due to the deletion of a subset of the historical tile directories.

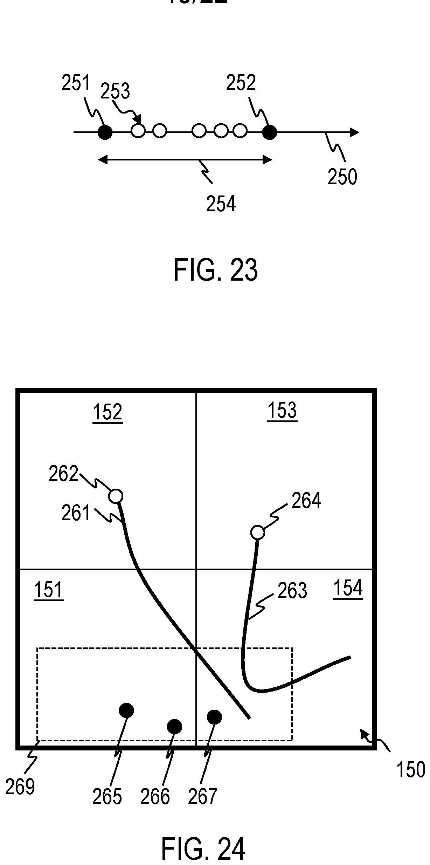

Fig. 23 schematically illustrates operation of updates of the tile directory as a function of time along a time axis 250 by the processing system 20. Filled circles indicate the generation 251, 252 of an updated tile directory. Empty circles indicate the storage of revision data 253 in the transaction data 231. A time-based criterion (such as expiry of a time period 254 that may be configurable, e.g., by means of a control input via the one or several interface(s) 21, 22) may trigger the generation 252 of the updated tile directory. The previously generated tile directory may be maintained for the time being.

The processing system 20 and/or the methods utilize a tiling having a hierarchical tile structure and an associated plurality of files that facilitate and support the processing of various types of requests for electronic map data. For illustration, requests for electronic map data by area and/or membership request for all map objects of which a specified object is a member can be processed efficiently. This will be described in more detail with reference to Fig. 24, Fig. 25, Fig. 26, and Fig. 27.

Fig. 24 is a schematic representation of a tiling comprising a first tile 151, a second tile 152, a third tile 153, and a fourth tile 154. The electronic map data comprise nodes 265, 266, 267 and ways 261, 263, with the geometries of the ways being stored in the second and third tiles 152, 153 in which nodes 262, 264 of the respective ways 261, 263 are located. As the way 261 overlaps not only with the second tile 152 but also with the first tile 151 and the fourth tile 154, the files associated with the first tile 151 and with the fourth tile 154 comprise references to the second tile 152 (or the file(s) associated therewith). As the way 263 overlaps not only with the third tile but also with the fourth tile 154, the file associated with the fourth tile 154 comprises a reference to the second tile 152 (or the file(s) associated therewith).

The processing system 20 is operative to process a request that specifies a closed boundary 269, which may be a rectangular. Responsive to such a request, the processing system 20 may determine all map objects that overlap with the area enclosed by the closed boundary 269. The file system in which files comprise references to other files associated with different tiles allows this operation to be performed in an efficient manner. More particularly, the processing system 20 may determine, based at least on the files associated with the first tile 151 and the fourth tile 154 with which the rectangular closed boundary 269 overlaps, that the ways 261, 263 extend into the first tile 150 one and/or the fourth tile 154. Thus, by way of the references, the processing system 20 can efficiently determine the object data for all map objects that overlap with the area specified by the closed boundary 269.

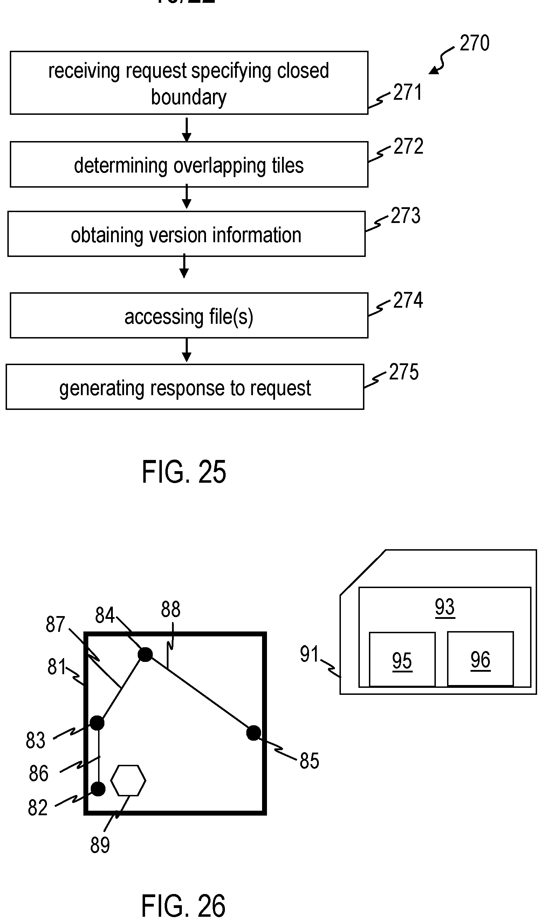

Fig. 25 is a flow chart of a method 270 of performing a map data-related function and/or of enabling access to electronic map data. The method 270 may be performed automatically by the processing system 20.

At process block 271, the processing system 20 receives a request for electronic map data. The request comprises data specifying a closed boundary. The request may specify a rectangular boundary and may be a request to trigger the processing system 20 to return for map objects overlapping with the rectangular area defined by the rectangular boundary.

At process block 272, the processing system 20 determines the tiles of the plurality of tiles that overlap with the area enclosed by the closed boundary.

At process block 273, the processing system 20 determines, based at least on the tile directory 26, version information for the files to be accessed.

At process block 274, the processing system 20 accesses the files in accordance with the version information, with the accesses files being associated with a tile overlapping with the area enclosed by the closed boundary or with a tile to which the file associated with a tile overlapping with the area includes a reference.

At process block 275, the processing system 20 generates a response. The processing system 20 generates the response based at least on the object data retrieved from the files accessed at process block 274. The processing system 20 may be operative to perform a data interface control operation to generate and output the response.

Fig. 26 is a schematic representation of a tile 81 and map objects stored in association with the tile 81. The map objects comprise nodes 82, 83, 84, 85, ways 86, 87, 88, and/or relations 89. A node 82 may be a member of (in the sense of being referenced by the definition of) one or several ways (such as way 86) and/or one or several relations (such as a traffic sign or POI 89). The file 91 associated with the tile 81 comprises object data 93 for at least some of the map objects 82-89. The file 91 may comprise one or several references to other tiles (or files associated with such other tiles). The file 91 may also comprise membership data 96 that is defines, for any map object, all other map objects of which the former is a member. For illustration, the membership data 96 may define, for a node 81, any way 82 and/or any relation 89 of which the node 81 is a member. The processing system 20 may be operative to access and utilize the membership data 96 to provide a response to a request for map objects of which a specified map object is a member.

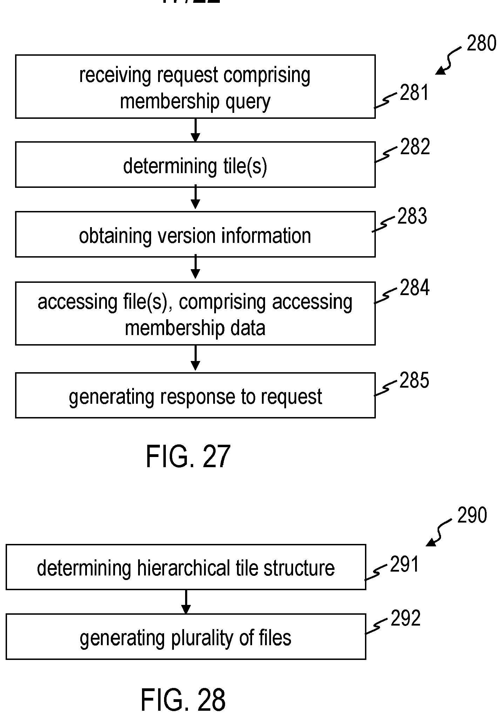

Fig. 27 is a flow chart of a method 280 of performing a map data-related function and/or of enabling access to electronic map data. The method 280 may be performed automatically by the processing system 20.

At process block 281, the processing system 20 receives a request for electronic map data. The request comprises a request for object data (e.g., identifiers of) all map objects of which a map object specified in the request is a member. The request may specify the target object by its unique object identifier 100.

At process block 282, the processing system 20 determines the tile(s) of the plurality of tiles that that are to be accessed based at least on the unique object identifier 100 of the target object in conjunction with the tile directory.

At process block 283, the processing system 20 determines, based at least on the tile directory 26, version information for the files to be accessed, with the files being associated with the tile(s) determined at process block 282.

At process block 284, the processing system 20 accesses the file(s) in accordance with the version information, with the accesses files being associated with the tile(s) identified based at least on the unique object identifier (and more specifically based at least on the bit sequence 101 thereof) at process block 282. Accessing the file(s) comprises accessing at least the membership data to determine the map objects of which the target map object specified in the request is a member.

At process block 285, the processing system 20 generates a response. The processing system 20 generates the response based at least on the object data retrieved from the files accessed at process block 284. The processing system 20 may be operative to perform an interface control operation to generate and output the response. The response may specify the map objects of which the target map object is a member. The response may optionally also comprise additional object data for these map objects, such as geolocations.

The tiling having a hierarchical tile structure is used by the processing system 20 provides various advantages, such as providing efficient accessibility of the electronic map data responsive to various types of requests. To support the efficient accessibility, the tiling and the plurality of files, each associated with one of the tiles, are determined in a manner that facilitates handling of the files by the processing system (irrespective of whether a rate or right operation is performed) while keeping the number of tiles as small as possible. This applies of during the initial generation of the hierarchical tile structure and the plurality of files and any modifications made to during operation of the processing system 20, when the electronic map data are modified.

Fig. 28 is a flow chart of a method 290 of performing a map data-related function and/or of enabling access to electronic map data. The method 290 may be performed automatically by the processing system 20. The method 290 may be performed both upon initial generation of the tiling and the plurality of files and upon modification thereof as the electronic map data is modified.

At 291, the processing system 20 determines a hierarchical tile structure. Determining the hierarchical tile structure may comprise determining tile sizes in a spatially varying manner. Determining the hierarchical tile structure may comprise determining the tile sizes such that, for any tile that is larger than a minimum tile size supported by the hierarchical tile structure, the file associated with this tile complies with a threshold criterion. As previously explained, the threshold criterion may be file size-based and/or based at least on a number of map objects. Determining the hierarchical tile structure may comprise determining the tile sizes such that, for any tile other than the largest tile supported by the hierarchical tile structure (which corresponds to the root node 114 of the hierarchical tile structure 110), the threshold criterion is fulfilled, while in the larger tile obtained by merging the respective tile with several adjacent tiles would result in a violation of the threshold criterion. In other words, determining the hierarchical tile structure may comprise determining the tile sizes such that any tile larger than the smallest supported tile size as the largest tile size for which compliance with the threshold criterion and is attained.

At 292, the processing system 20 generates the plurality of files, each of the files being associated with one of the tiles of the tiling determined at 291. Generating the plurality of files may comprise storing object definitions of map objects located in the respective tile in the associated file. Generating the plurality of files may comprise including a version number into the respective tile. The version number is modified as the files are modified during operation of the processing system 20, and, more particularly, during the modification of the electronic map data.

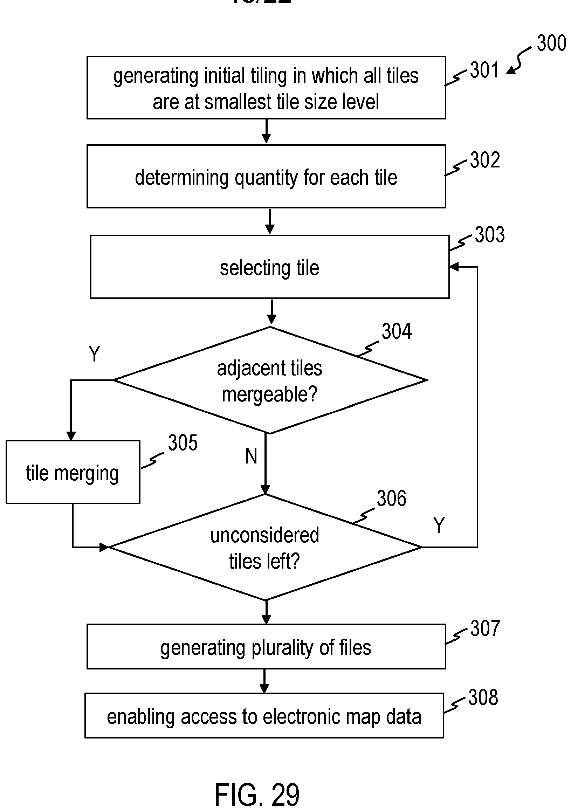

Fig. 29 is a flow chart of a method 300 of performing a map data-related function and/or of enabling access to electronic map data. The method 300 may be performed automatically by the processing system 20. The method 300 may be performed upon initial generation of the tiling and the plurality of files and/or upon modification of the electronic map data.

At 301, the processing system 20 may generate an initial tiling in which all tiles have a same tile size. The same tile size may be, but does not need to be, equal to the minimum tile size supported by the processing system 20 for the tiling. For illustration, if it is evident from the overall number of objects and/or the density of objects, that tiles greater than the minimum tile size supported by the processing system 20 will not result in a violation of the threshold criterion, the process 300 may commence with a tile size greater than the minimum tile size supported by the processing system 20 (which is determined by the number of bits in the bit sequence 101).

At 302, the processing system 20 determines, for each of the tiles, the quantity of relevance to the threshold comparison. The quantity may comprise the number of map objects. Alternatively or additionally, the quantity may comprise a file size of a file that stores the object definitions of all map objects located within the respective tile.

At 303 to 306, tiles are systematically merged in such a manner that the tiles remain accessible by means of the hierarchical tile structure (such as the quadtree 110) in a systematic manner, while taking advantage of the fact that larger tiles may be used in regions in which the density of map objects is less than in other regions.

At 303, a tile is selected automatically by the processing system.

At 304, it is determined whether the tile can be merged with adjacent tiles having the same parent node in the hierarchical tile structure, with the merged tile (which corresponds to the parent node) being still in conformity with the threshold criterion.

At 305, responsive to determining that the merging can be performed without violating the threshold criterion, the adjacent tiles having the same parent node are merged to thereby inform a larger tile, which corresponds to the parent node in the hierarchical tile structure of the several merged tiles.

At 306, it is determined whether there are any unconsidered tiles left. If this is the case, the process returns to 303.

by means of an iterative reputation of 303 to 306, the process 300 identifies the tiling such that the tiles can be accessed in accordance with the hierarchical tile structure (such as the quarterly 110) in a systematic manner, while ensuring compliance with the threshold criterion for any tile greater than the minimum tile size supported by the processing system, and while further ensuring that the tiling is composed of the largest tiles that ensure conformity with the threshold criterion (i.e., merger of tiles into a larger tile corresponding to the parent node in the hierarchical tile structure would result in a violation of the threshold criterion).

At 307, the processing system 20 generates the plurality of files, each of the files being associated with one of the tiles of the tiling determined at 301-306. Generating the plurality of files may comprise storing object definitions of map objects located in the respective tile in the associated file. Generating the plurality of files may comprise including a version number into the respective tile. The version number is modified as the files are modified during operation of the processing system 20, and, more particularly, during the modification of the electronic map data.

At 308, the processing system 20 enables access to the electronic map data and/or enables performance of a map data -related function.

The processing system 20 and methods disclosed herein are operative such that the size of tiles in the tiling varies as a function of object density and, thus, as a function of geolocation.

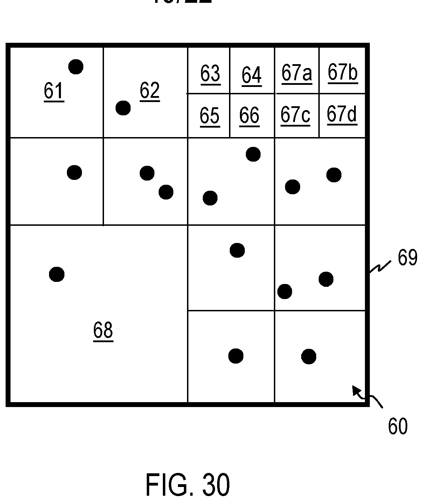

Fig. 30 illustrates this for a tiling 60, wherein map objects are schematically shown by circles for all tiles other than the smallest tile size shown in Fig. 30. The tile 68 has a larger size than the other tiles, as the density of map objects in the region covered by the tile 68 is smaller than in the other regions covered by the tiling 60. Due to the organization of the tiling in accordance with the hierarchical tile structure (such as the quadtree structure 110), some of the smaller tiles such as tile 61, 62 may also have a comparatively small density of map objects. For illustration, the processing system 20 and methods will not use a larger tile in the tiling 60 if any one of several sibling nodes in the hierarchical tile structure (with sibling nodes being nodes having a common parent node) represents a tile in which the density of map objects is so large that the tile associated with the parent node would result in a violation of the threshold criterion. Thereby, the tiling utilized by the processing system and methods disclosed herein provides efficient access, inter alia due to its structure and the consideration of the threshold criterion for generating the tiling and/or the plurality of files.

Modifications in the electronic map data by way of adding, changing, or deleting map object definitions may be performed so as to improve agreement between the electronic map data and the physical world reality in which the electronic map data is used for performing map-based functions.

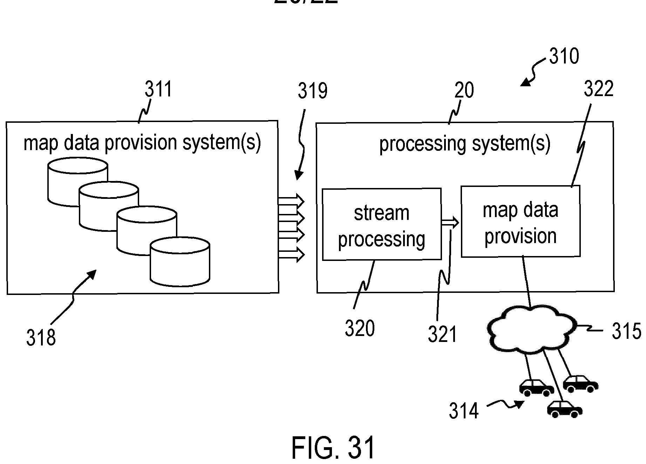

With reference to Fig. 31, Fig. 32, Fig. 33, and Fig. 34, the operation of the processing system 20 and/or of the system 310 comprising the processing system 310 will be explained in more detail.

Fig. 31 shows the system 310 in which the processing system 20 performs a stream processing 320 to generate map data 321 for one or several map products, stored in the plurality of files 24. The processing system 20 comprises a map data provision 322 to make the map data available to map data consumers, which may comprise devices and/or systems of vehicles 314. Requests for modification of the electronic map data may be received by the processing system 20 over at least one communication link 319, representing changes to different map layers 318.

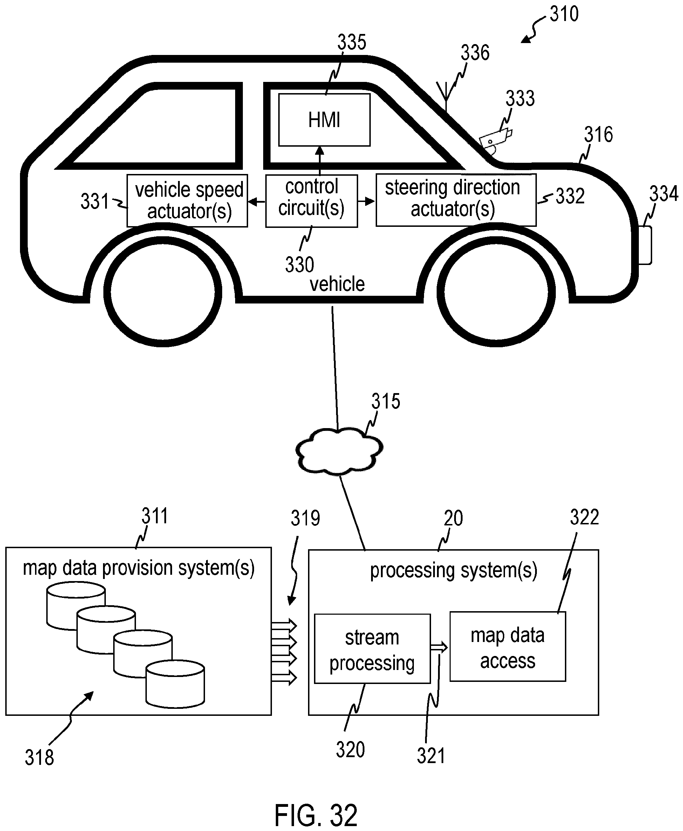

Fig. 32 shows a schematic representation of the system 310 which comprises the one or several map data provision systems 311, the processing system 20, and a map data consumer 316. The map data consumer 316 comprises at least one control circuit 330. The at least one control circuit 330 may be communicatively coupled with a communication interface 336 of the electronic map data consumer 268. The at least one control circuit 330 may be operative to perform a map data-related function based at least on the electronic map data that is based at least on the output stream 321 of the stream processing 320, which results in modifications of the electronic map data stored in the plurality of files. The at least one control circuit 330 may be operative to perform at least one control action, based at least on the electronic map data, to control one or several actuators 331, 332 and/or a human machine interface 335. The at least one control circuit 330 may be operative to use the electronic map data in combination with sensor data captured using one or several sensors, such as a distance sensor 334 and/or a camera 333, to perform the at least one control operation.

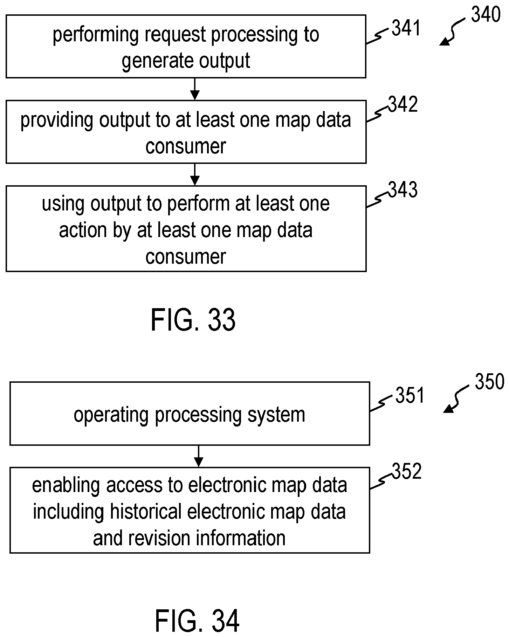

Fig. 33 is a flow chart of a method 340. The method 340 may be performed automatically by or using the processing system 20 and at least one map data consumer, such as map data consumer 316.

At process block 341, the processing system 20 processes at least one request for electronic map data for enabling access to the electronic map data and/or for performance of a map data -related function.

At process block 342, output is provided by the processing system 20 to at least one map data consumer. The output is based at least on the processing performed by the processing system 20.

At process block 343, the map data consumer 316 performs at least one action based at least on the output of the stream processing. The at least one action may comprise a control action. The at least one action may be any one or any combination of a route search, a navigation function, a driver assistance function, an advanced driver assistance function, an autonomous driving function. The at least one action may comprise at least one control action. The at least one control action may comprise controlling at least one actuator and/or controlling a human machine interface.

Fig. 34 is a flow chart of a method 350. The method 350 may be performed automatically by or using the processing system 20. The method 350 may be or may comprise a method of using the processing system 20 to enable efficient access to the versioned electronic map data.

At process block 351, the processing system 20 operates to maintain electronic map data. Maintaining the electronic map data may comprise providing the plurality of files 24 associated with a tiling, and optionally providing a tile directory that comprises version information.

At process block 352, the processing system 20 enables access to the electronic map data for performance of a map data -related function. Enabling access to the electronic map data may comprise modifying, by the processing system 20, the electronic map data responsive to requests for modification of the electronic map data. Enabling access to the electronic map data may comprise providing, by the processing system 20, output based at least on at least one request originating from a map data consumer.

While embodiments have been described with reference to the drawings, modifications and alterations may be implemented in other embodiments. While exemplary use cases in which the methods and vehicle processing system can be applied have been described in detail, the techniques disclosed herein may be used in association with a variety of additional scenarios. For further illustration, while exemplary map layers, hierarchical tile structures, object identifier structures have been described, the techniques disclosed herein are generally applicable to a wide variety of map layers, hierarchical tile structures, and object identifier structures.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of performing a map data-related function, the method comprising:
receiving, by a processing system (20), a request (47, 47', 48);
accessing, by the processing system (20), electronic map data comprising versioned electronic map data, wherein the versioned electronic map data comprises a plurality of files (24) storing object data of map objects located in a plurality of tiles (61-68), wherein different ones of the plurality of tiles (61-68) are associated with different geographic regions of an area covered by the electronic map data, wherein accessing the electronic map data comprises:
accessing, based at least on the request (47, 47', 48), a tile directory (26), wherein the tile directory (26) comprises version information for one or both of: each of the plurality of files (24); each of the plurality of tiles (61-68);
identifying, based at least on the request (47, 47', 48) and the tile directory (26), a first file (91)of the plurality of files (24);
accessing, based at least on the request (47, 47', 48), object data for an object in
the first file (91) responsive to determining, by the processing system (20), that the object data is included in the first file (91);
a second file (92) of the plurality of files (24) responsive to determining, by the processing system (20), that the first file (91) includes a reference (94) for accessing the object data (95), the second file (92) being different from the first file (91);
performing, by the processing system (20), an operation based at least one the object data.

2. The method of claim 1, wherein the first file (91) is associated with a first tile (81) of the plurality of tiles (61-68), wherein the second file (92) is associated with a second tile (82) of the plurality of the tiles, the second tile (82) being different from the first tile (81).

3. The method of claim 2, wherein the first tile abuts on the second tile at a corner point of the first tile or along an edge of the first tile, and/or wherein the first tile has a first size, the second tile has a second size, and the second size is different from the first size, optionally wherein a quotient of the first size divided by the second size is b", where b is a positive integer, and where n is a positive integer or a negative integer.

4. The method of any one of the preceding claims, wherein the request (47, 47', 48) comprises a request (47, 47', 48) to modify the object, wherein accessing the electronic map data comprises generating, in response to the request (47, 47', 48), an updated first file from the first file and causing the updated first file to be stored.

5. The method of claim 4, wherein accessing the electronic map data further comprises updating, in response to the request (47, 47', 48), the tile directory (26) to reflect that the updated first file corresponds to a revision caused by the request (47, 47', 48).

6. The method of claim 4 or claim 5, wherein
the request (47, 47', 48) comprises a request (47, 47', 48) to modify coordinates of the object from first coordinates located in the first tile to modified coordinates located in a third tile different from the first tile,
wherein accessing the electronic map data further comprises generating an updated third file from a third file associated with the third tile and causing the updated third file to be stored, wherein generating the updated third file comprises including into the updated third file a reference to the updated first file.

7. The method of claim 6, wherein generating the updated first file comprises updating version data and object coordinate data in the first file, and wherein accessing the electronic map data comprises leaving an identifier for the object unchanged when generating the updated first file and the updated third file, the identifier allowing the first file to be identified in the plurality of files (24).

8. The method of any one of claims 4 to 7, wherein the updated first file is stored without overwriting or deleting the first file.

9. The method of any one of the preceding claims, wherein the versioned electronic map data comprises a set of first files corresponding to different versions of the versioned electronic map data, the set of first files being associated with the first tile, the set of first files comprising the first file.

10. The method of claim 9, wherein the request (47, 47', 48) comprises time data and/or version data, and wherein the processing system (20) determines, based at least on the time data and/or the version data, the first file to be accessed in the set.

11. The method of any one of the preceding claims, wherein
the tile directory (26) associates each tile with a most recent revision that caused an update of the tile and that precedes a generation or an update of the tile directory (26).

12. The method of any one of the preceding claims, wherein performing the operation comprises generating, by the processing system (20), output based at least on the object data.

13. The method of any one of the preceding claims, wherein performing the operation comprises enabling, by the processing system (20), at least one map data-related function to be performed, the at least one map data-related function comprising one, several, or all of:
map data provision for use by a route search system;
map data provision for use by a route guidance system;
map data provision for use by a driver assistance system;
map data provision for use by an advanced driver assistance system;
map data provision for use by an autonomous vehicle system;
map data updates;
deployment of map data updates.

14. Map data generated using the method of any one of the preceding claims.

15. Machine-readable instruction code which, upon execution by at least one processing circuit (30), causes the at least one processing circuit (30) to perform the method of any one of the preceding claims.
